# EUROPEAN PATENT APPLICATION

(11) **EP 4 236 396 A2**
(43) Date of publication of application: **30.08.2023**
(21) Application number: 23166372.5
(22) Date of filing: 14.08.2020
(51) Int. Cl.: H04W 4/40

(54) **COMMUNICATION METHOD AND COMMUNICATION DEVICE**

(30) Priority: 16.08.2019 CN 201910760892
(62) Divisional of application: 20853793.6
(71) Applicant: Huawei Technologies Co., Ltd., Shenzhen, Guangdong 518129 (CN)
(72) Inventor: PENG, Wenjie, Shenzhen, 518129 (CN); WANG, Jun, Shenzhen, 518129 (CN); WEI, Dongdong, Shenzhen, 518129 (CN); DAI, Mingzeng, Shenzhen, 518129 (CN)
(74) Representative: Gill Jennings & Every LLP

(57) **Abstract**

This application provides a communication method and a communication apparatus, so that sidelink signaling can be used for transmission of AS configuration information. Specifically, a first terminal device obtains a source identifier allocated to groupcast communication by a second terminal device, where the groupcast communication is communication for a target group, and the first terminal device and the second terminal device belong to the target group. A V2X layer of the first terminal device generates first sidelink signaling, and sends the first sidelink signaling, a first identifier, and a group identifier to an AS of the first terminal device, where the first identifier is a source identifier allocated to the groupcast communication by the first terminal device, and the group identifier is used to identify the target group. The AS sends the first sidelink signaling by using the first identifier as a source identifier and using the group identifier as a destination identifier.

## Description

This application claims priority to Chinese Patent Application No. 201910760892.8, filed with the China National Intellectual Property Administration on August 16, 2019 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

New radio (new radio, NR) vehicle to everything (vehicle to everything, V2X) supports groupcast communication. In a group, there may be a requirement for transmission of access stratum (access stratum, AS)-related information, that is, there may be a scenario in which information transmission is not triggered by an application (application, APP) layer. For example, after one user equipment (user equipment, UE) in the group groupcasts data, the other UEs need to perform hybrid automatic repeat request (hybrid automatic repeat request, HARQ) feedback. In this case, the UEs in the group need to learn of resources for performing HARQ feedback. According to a current technology, a unicast connection can be triggered only by the APP layer, and there is no solution in which a unicast connection or groupcast is triggered by an AS. Therefore, the UEs in the group cannot learn of the resources for performing HARQ feedback.

### SUMMARY

This application provides a communication method, so that sidelink signaling can be used for performing transmission of AS configuration information based on group-related information.

According to a first aspect, a communication method is provided, and includes: A first terminal device obtains a source identifier allocated to groupcast communication by a second terminal device, where the groupcast communication is communication for a target group, and the first terminal device and the second terminal device belong to the target group. A V2X layer of the first terminal device generates first sidelink signaling. The V2X layer sends the first sidelink signaling, a first identifier, and a group identifier to an AS of the first terminal device, where the first identifier is a source identifier allocated to the groupcast communication by the first terminal device, and the group identifier is used to identify the target group. The AS sends the first sidelink signaling by using the first identifier as a source identifier and using the group identifier as a destination identifier.

In a manner, the first sidelink signaling may include the source identifier allocated to the groupcast communication by the second terminal device and access stratum AS configuration information of the second terminal device.

Therefore, based on this solution, the first terminal device may send sidelink signaling based on the source identifier allocated to the groupcast communication by the first terminal device and the group identifier of the target group, and perform transmission of the AS configuration information of the second terminal device through the sidelink signaling.

In another manner, the first sidelink signaling may include a source identifier allocated to the groupcast communication by each terminal device in the target group and access stratum AS configuration information of each terminal device.

Therefore, based on this solution, any terminal device in the target group may obtain AS configuration information of another terminal device.

In still another manner, the first sidelink signaling may include a source identifier list, and the source identifier list includes the source identifier allocated to the groupcast communication by each terminal device in the target group. A first source identifier and a location of the first source identifier in the source identifier list indicate AS configuration information of a terminal device corresponding to the first source identifier, and the first source identifier is a source identifier allocated to the groupcast communication by the any terminal device in the target group. In other words, any source identifier in the source identifier list and a location of the source identifier in the source identifier list are used by a terminal device corresponding to the source identifier to determine AS configuration information corresponding to the terminal device.

Therefore, based on this solution, the any terminal device in the target group may obtain the AS configuration information of the another terminal device.

With reference to the first aspect, in some implementations of the first aspect, before that a V2X layer of the first terminal device generates first sidelink signaling, the method further includes: The AS of the first terminal device sends configuration information to the V2X layer. That a V2X layer of the first terminal device generates first sidelink signaling includes: The V2X layer generates the first sidelink signaling based on the configuration information.

The configuration information includes the group identifier. The configuration information may further include: the source identifier allocated to the groupcast communication by the second terminal device and the AS configuration information of the second terminal device, or the source identifier allocated to the groupcast communication by each terminal device in the target group and the access stratum AS configuration information of each terminal device, or the source identifier list.

With reference to the first aspect, in some implementations of the first aspect, the AS configuration information of the second terminal device includes first AS configuration information, the first AS configuration information is used by the second terminal device to determine a first feedback resource, and the first feedback resource is used by the second terminal device to perform hybrid automatic repeat request HARQ feedback on the groupcast communication initiated by the first terminal device.

Based on this solution, the second terminal device may determine a resource for performing hybrid automatic repeat request HARQ feedback on the groupcast communication initiated by the first terminal device.

With reference to the first aspect, in some implementations of the first aspect, the first AS configuration information is further used by the second terminal device to determine at least one second feedback resource, the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

Based on this solution, the second terminal device may determine a resource for performing hybrid automatic repeat request HARQ feedback on the groupcast communication initiated by the any terminal device in the target group.

With reference to the first aspect, in some implementations of the first aspect, the AS configuration information of the second terminal device further includes at least one piece of second AS configuration information, the at least one piece of second AS configuration information is in a one-to-one correspondence with the terminal device other than the second terminal device in the target group, second AS configuration information corresponding to a third terminal device is used by the third terminal device to determine at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is any terminal device other than the second terminal device in the target group.

Based on this solution, the second terminal device may determine a resource for performing hybrid automatic repeat request HARQ feedback on the groupcast communication initiated for the another terminal device by the any terminal device in the target group.

With reference to the first aspect, in some implementations of the first aspect, the method may further include: The first terminal device receives second sidelink signaling sent by the second terminal device, where the second sidelink signaling includes third AS configuration information, the third AS configuration information is used by the first terminal device to determine a fourth feedback resource, and the fourth feedback resource is used by the first terminal device to perform hybrid automatic repeat request HARQ feedback on the groupcast communication initiated by the second terminal device.

Based on this solution, the first terminal device may determine a resource for performing HARQ feedback on the groupcast communication initiated by the second terminal device.

Optionally, the third AS configuration information is further used by the first terminal device to determine a resource for performing HARQ feedback on the groupcast communication initiated by another terminal device in the target group.

With reference to the first aspect, in some implementations of the first aspect, before the first terminal device obtains a source identifier allocated to the groupcast communication by each terminal device in the target group, the method further includes:

The first terminal device broadcasts a group establishment request message by using the first identifier as a source identifier and using, as a destination identifier, a default identifier corresponding to a target service type, where the group establishment request message is used to request to establish the target group, and the group establishment request message includes the group identifier and information that is about the target group and that is in an application layer.

The first terminal device receives a group establishment request accept message fed back by each terminal device other than the first terminal device in the target group, where the group establishment request accept message corresponding to any terminal device is sent by using, as a source identifier, a source identifier allocated to the groupcast communication by the terminal device and using the group identifier as a destination identifier.

Based on this solution, the target group may be established, and the first terminal device may obtain the source identifier allocated to the groupcast communication by each terminal device in the target group.

According to a second aspect, a communication method is provided, and includes: A second terminal device receives first sidelink signaling sent by a first terminal device.

In a manner, the first sidelink signaling may include the source identifier allocated to the groupcast communication by the second terminal device and access stratum AS configuration information of the second terminal device. In this application, the groupcast communication is communication for a target group, and the first terminal device and the second terminal device belong to the target group.

Based on this solution, the first terminal device may send sidelink signaling based on the source identifier allocated to the groupcast communication by the first terminal device and the group identifier of the target group, and perform transmission of the AS configuration information of the second terminal device through the sidelink signaling.

In another manner, the first sidelink signaling may include a source identifier allocated to the groupcast communication by each terminal device in the target group and access stratum AS configuration information of each terminal device.

Based on this solution, any terminal device in the target group may obtain AS configuration information of another terminal device.

In still another manner, the first sidelink signaling may include a source identifier list, and the source identifier list includes the source identifier allocated to the groupcast communication by each terminal device in the target group. A first source identifier and a location of the first source identifier in the source identifier list indicate AS configuration information of a terminal device corresponding to the first source identifier, and the first source identifier is a source identifier allocated to the groupcast communication by the any terminal device in the target group. In other words, any source identifier in the source identifier list and a location of the source identifier in the source identifier list are used by a terminal device corresponding to the source identifier to determine AS configuration information corresponding to the terminal device.

Based on this solution, the any terminal device in the target group may obtain the AS configuration information of another terminal device.

With reference to the second aspect, in some implementations of the second aspect, that a second terminal device receives first sidelink signaling sent by a first terminal device includes: A V2X layer of the second terminal device receives the first sidelink signaling.

The method further includes: The V2X layer sends, to an access stratumAS of the second terminal device, the source identifier allocated to the groupcast communication by the second terminal device and the AS configuration information of the second terminal device.

With reference to the second aspect, in some implementations of the second aspect, the AS configuration information of the second terminal device includes first AS configuration information; and the method further includes: The AS determines a first feedback resource based on the first AS configuration information, where the first feedback resource is used by the second terminal device to perform hybrid automatic repeat request HARQ feedback on the groupcast communication initiated by the first terminal device.

With reference to the second aspect, in some implementations of the second aspect, the AS determines at least one second feedback resource based on the first AS configuration information, where the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the second aspect, in some implementations of the second aspect, the AS configuration information of the second terminal device further includes at least one piece of second AS configuration information; and the method further includes: The AS determines, based on the at least one piece of second AS configuration information, a feedback resource corresponding to any terminal device other than the second terminal device in the target group, where a feedback resource of a third terminal device includes at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is the any terminal device other than the second terminal device in the target group.

With reference to the second aspect, in some implementations of the second aspect, the method further includes: The second terminal device sends second sidelink signaling to the first terminal device, where the second sidelink signaling includes third AS configuration information.

The second terminal device determines a fourth feedback resource based on the third AS configuration information, where the fourth feedback resource is used by the first terminal device to perform hybrid automatic repeat request HARQ feedback on the groupcast communication initiated by the second terminal device.

With reference to the second aspect, in some implementations of the second aspect, the first sidelink signaling further includes a source identifier allocated to the groupcast communication by each terminal device other than the second terminal device in the target group and AS configuration information of each terminal device.

With reference to the second aspect, in some implementations of the second aspect, before that a second terminal device receives first sidelink signaling sent by a first terminal device, the method further includes: The second terminal device receives, by using the first identifier as a source identifier and using a default identifier corresponding to a target service type as a destination identifier, a group establishment request message broadcast by the first terminal device, where the group establishment request message is used to request to establish the target group, the group establishment request message includes a group identifier and information that is about the target group and that is in an application layer, and the group identifier is used to identify the target group. The second terminal device sends a group establishment request accept message to the first terminal device by using a second identifier as a source identifier and using the group identifier as a destination identifier, where the second identifier is a source identifier allocated to the groupcast communication by the second terminal device.

According to a third aspect, a communication method is provided, and includes: A first terminal device obtains a first identifier and a second identifier, where the first identifier is a source identifier allocated to groupcast communication by the first terminal device, the second identifier is a source identifier allocated to the groupcast communication by a second terminal device, the groupcast communication is communication for a target group, and the first terminal device and the second terminal device belong to the target group. The first terminal device sends first access stratum AS configuration information to the second terminal device by using the first identifier as a source identifier and using the second identifier as a destination identifier.

According to the communication method provided in this application, the first terminal device may send AS configuration information to the second terminal device based on the source identifier allocated to the groupcast communication by the first terminal device and the source identifier allocated to the groupcast communication by the second terminal device, so as to implement transmission of the AS configuration information.

With reference to the third aspect, in some implementations of the third aspect, the first AS configuration information is used by the second terminal device to determine a first feedback resource, and the first feedback resource is used by the second terminal device to perform hybrid automatic repeat request HARQ feedback on the groupcast communication initiated by the first terminal device.

With reference to the third aspect, in some implementations of the third aspect, the first AS configuration information is further used by the second terminal device to determine at least one second feedback resource, the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the third aspect, in some implementations of the third aspect, the method further includes: The first terminal device sends at least one piece of second AS configuration information to the second terminal device, where the at least one piece of second AS configuration information is in a one-to-one correspondence with the terminal device other than the second terminal device in the target group, second AS configuration information corresponding to a third terminal device is used by the third terminal device to determine at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is any terminal device other than the second terminal device in the target group.

With reference to the third aspect, in some implementations of the third aspect, the method further includes: The first terminal device receives third AS configuration information sent by the second terminal device.

With reference to the third aspect, in some implementations of the third aspect, the third AS configuration information is used by the first terminal device to determine a fourth feedback resource, and the fourth feedback resource is used by the first terminal device to perform hybrid automatic repeat request HARQ feedback on the groupcast communication initiated by the second terminal device.

With reference to the third aspect, in some implementations of the third aspect, before that a first terminal device obtains a first identifier and a second identifier, the method further includes:

The first terminal device broadcasts a group establishment request message by using the first identifier as a source identifier and using, as a destination identifier, a default identifier corresponding to a target service type, where the target service type is a service type for initiating establishment of the target group, the group establishment request message is used to request to establish the target group, and the group establishment request message includes a group identifier allocated to the target group by the first terminal device and information that is about the target group and that is in an application layer.

The first terminal device receives a group establishment request accept message fed back by the second terminal device, where the group establishment request accept message is sent by using the second identifier as a source identifier and using the group identifier as a destination identifier.

Based on this solution, the first terminal device may establish the target group, and may obtain a source identifier allocated to the groupcast communication by each terminal device in the target group.

According to a fourth aspect, a communication method is provided, and includes: A second terminal device receives, by using a first identifier as a source identifier and using a second identifier as a destination identifier, first access stratum AS configuration information sent by a first terminal device, where the first identifier is a source identifier allocated to groupcast communication by the first terminal device, the second identifier is a source identifier allocated to the groupcast communication by the second terminal device, the groupcast communication is communication for a target group, and the first terminal device and the second terminal device belong to the target group.

According to the communication method provided in this application, the second terminal device may obtain AS configuration information based on the source identifiers allocated to the groupcast communication by the first terminal device and the second terminal device.

With reference to the fourth aspect, in some implementations of the fourth aspect, the second terminal device determines a first feedback resource based on the first AS configuration information, where the first feedback resource is used by the second terminal device to perform hybrid automatic repeat request HARQ feedback on the groupcast communication initiated by the first terminal device.

With reference to the fourth aspect, in some implementations of the fourth aspect, the method further includes: The second terminal device determines at least one second feedback resource based on the first AS configuration information, where the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the fourth aspect, in some implementations of the fourth aspect, the method further includes: The second terminal device receives, by using the first identifier as a source identifier and using the second identifier as a destination identifier, at least one piece of second AS configuration information sent by the first terminal device. The second terminal device determines, based on the second AS configuration information, a feedback resource corresponding to any terminal device other than the second terminal device in the target group, where a feedback resource of a third terminal device includes at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is the any terminal device other than the second terminal device in the target group.

With reference to the fourth aspect, in some implementations of the fourth aspect, the method further includes: The second terminal device sends third AS configuration information to the first terminal device by using the second identifier as a source identifier and using the first identifier as a destination identifier.

With reference to the fourth aspect, in some implementations of the fourth aspect, the third AS configuration information is used by the first terminal device to determine a fourth feedback resource, and the fourth feedback resource is used by the first terminal device to perform hybrid automatic repeat request HARQ feedback on the groupcast communication initiated by the second terminal device.

With reference to the fourth aspect, in some implementations of the fourth aspect, before that a second terminal device receives first access stratum AS configuration information sent by a first terminal device, the method further includes: The second terminal device receives, by using the first identifier as a source identifier and using a default identifier corresponding to a target service type as a destination identifier, a group establishment request message broadcast by the first terminal device, where the target service type is a service type for initiating establishment of the target group, the group establishment request message is used to request to establish the target group, the group establishment request message includes a group identifier and information that is about the target group and that is in an application layer, and the group identifier is used to identify the target group. The second terminal device sends a group establishment request accept message to the first terminal device by using the second identifier as a source identifier and using the group identifier as a destination identifier.

According to a fifth aspect, a communication method is provided, and includes: A first terminal device obtains a second identifier, where the second identifier is a source identifier allocated to groupcast communication by a second terminal device, the groupcast communication is communication for a target group, and the target group includes the first terminal device and the second terminal device. A V2X layer of the first terminal device generates a unicast connection establishment request message, where the unicast connection establishment request message includes the second identifier. The V2X layer sends the unicast connection establishment request message, a third identifier, and a default identifier corresponding to a target service type to an access stratum AS of the first terminal device, where the third identifier is a source identifier allocated by the first terminal device to a unicast connection that the unicast connection establishment request message requests to establish, and the target service type is a service type for initiating establishment of the target group. The AS broadcasts the unicast connection establishment request message by using the third identifier as a source identifier and using, as a destination identifier, the default identifier corresponding to the target service type. The first terminal device receives a unicast connection establishment response message sent by the second terminal device, where the unicast connection establishment response message is sent by using a fourth identifier as a source identifier and using the third identifier as a destination identifier, and the fourth identifier is a source identifier allocated by the second terminal device to the unicast connection.

According to the method provided in this application, the first terminal device and the second terminal device may establish the unicast connection based on information related to the target group, so that transmission of AS configuration information can be implemented based on the unicast connection.

With reference to the fifth aspect, in some implementations of the fifth aspect, before that a V2X layer generates a unicast connection establishment request message, the method further includes: The AS sends indication information to the V2X layer, where the indication information is used to trigger the V2X layer to establish the unicast connection, and the indication information includes the second identifier. That a V2X layer of the first terminal device generates a unicast connection establishment request message includes: The V2X layer generates the unicast connection establishment request message based on the indication information.

In other words, the AS triggers establishment of the unicast connection between the first terminal device and the second terminal device.

With reference to the fifth aspect, in some implementations of the fifth aspect, the method further includes: The first terminal device sends first AS configuration information to the second terminal device by using the third identifier as a source identifier and using the fourth identifier as a destination identifier.

According to the method, the first terminal device may perform transmission of the AS configuration information through the established unicast connection between the first terminal device and the second terminal device.

With reference to the fifth aspect, in some implementations of the fifth aspect, the first AS configuration information is used by the second terminal device to determine a first feedback resource, and the first feedback resource is used by the second terminal device to perform hybrid automatic repeat request HARQ feedback on the groupcast communication initiated by the first terminal device.

With reference to the fifth aspect, in some implementations of the fifth aspect, the first AS configuration information is further used by the second terminal device to determine at least one second feedback resource, the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the fifth aspect, in some implementations of the fifth aspect, the method further includes:

The first terminal device sends at least one piece of second AS configuration information to the second terminal device by using the third identifier as a source identifier and using the fourth identifier as a destination identifier.

The at least one piece of second AS configuration information is in a one-to-one correspondence with the terminal device other than the second terminal device in the target group, second AS configuration information corresponding to a third terminal device is used by the third terminal device to determine at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is any terminal device other than the second terminal device in the target group.

With reference to the fifth aspect, in some implementations of the fifth aspect, the method further includes: The first terminal device receives third AS configuration information sent by the second terminal device.

With reference to the fifth aspect, in some implementations of the fifth aspect, the third AS configuration information is used by the first terminal device to determine a second feedback resource, and the second feedback resource is used by the first terminal device to perform hybrid automatic repeat request HARQ feedback on the groupcast communication initiated by the second terminal device.

With reference to the fifth aspect, in some implementations of the fifth aspect, before that a first terminal device obtains a second identifier, the method further includes: The first terminal device broadcasts a group establishment request message by using the first identifier as a source identifier and using, as a destination identifier, the default identifier corresponding to the target service type, where the first identifier is a source identifier allocated to the groupcast communication by the first terminal device, the target service type is the service type for initiating the establishment of the target group, the group establishment request message is used to request to establish the target group, and the group establishment request message includes a group identifier allocated to the target group by the first terminal device and information that is about the target group and that is in an application layer. The first terminal device receives a group establishment request accept message fed back by the second terminal device, where the group establishment request accept message is sent by using the second identifier as a source identifier and using the group identifier as a destination identifier.

Based on this solution, the first terminal device may establish the target group, and may learn of a source identifier allocated to the groupcast communication by each terminal device in the target group.

According to a sixth aspect, a communication method is provided, and includes: A second terminal device receives a unicast connection establishment request message sent by a first terminal device. The second terminal device sends a unicast connection establishment response message to the first terminal device by using a fourth identifier as a source identifier and using a third identifier as a destination identifier, where the third identifier is a source identifier allocated by the first terminal device to a unicast connection that the unicast connection establishment request message requests to establish, the fourth identifier is a source identifier allocated by the second terminal device to the unicast connection, and the first terminal device and the second terminal device belong to a target group.

According to the method provided in this application, the first terminal device and the second terminal device may establish the unicast connection based on information related to the target group, so that transmission of AS configuration information can be implemented based on the unicast connection.

With reference to the sixth aspect, in some implementations of the sixth aspect, the method further includes: The second terminal device receives, by using the third identifier as a source identifier and using the fourth identifier as a destination identifier, first AS configuration information sent by the first terminal device.

With reference to the sixth aspect, in some implementations of the sixth aspect, the method further includes: The second terminal device determines a first feedback resource based on the first AS configuration information, where the first feedback resource is used by the second terminal device to perform hybrid automatic repeat request HARQ feedback on groupcast communication initiated by the first terminal device, and the groupcast communication is communication for the target group.

With reference to the sixth aspect, in some implementations of the sixth aspect, the second terminal device determines at least one second feedback resource based on the first AS configuration information, where the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the sixth aspect, in some implementations of the sixth aspect, the method further includes: The second terminal device receives, by using the first identifier as a source identifier and using the second identifier as a destination identifier, at least one piece of second AS configuration information sent by the first terminal device. The second terminal device determines, based on the second AS configuration information, a feedback resource corresponding to any terminal device other than the second terminal device in the target group, where a feedback resource of a third terminal device includes at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is the any terminal device other than the second terminal device in the target group.

With reference to the sixth aspect, in some implementations of the sixth aspect, the method further includes: The second terminal device sends third AS configuration information to the first terminal device by using the fourth identifier as a source identifier and using the third identifier as a destination identifier.

With reference to the sixth aspect, in some implementations of the sixth aspect, the third AS configuration information is used by the first terminal device to determine a fourth feedback resource, the fourth feedback resource is used by the first terminal device to perform hybrid automatic repeat request HARQ feedback on the groupcast communication initiated by the second terminal device, and the groupcast communication is the communication for the target group.

With reference to the sixth aspect, in some implementations of the sixth aspect, before that a second terminal device receives a unicast connection establishment request message sent by a first terminal device, the method further includes: The second terminal device receives, by using the first identifier as a source identifier and using a default identifier corresponding to a target service type as a destination identifier, a group establishment request message broadcast by the first terminal device, where the target service type is a service type for initiating establishment of the target group, the group establishment request message is used to request to establish the target group, the group establishment request message includes a group identifier and information that is about the target group and that is in an application layer, and the group identifier is used to identify the target group. The second terminal device sends a group establishment request accept message to the first terminal device by using the second identifier as a source identifier and using the group identifier as a destination identifier.

According to a seventh aspect, a communication method is provided, and includes: A first terminal device broadcasts a group establishment request message by using a first identifier as a source identifier and using, as a destination identifier, a default identifier corresponding to a target service type, where the first identifier is a source identifier allocated to groupcast communication by the first terminal device, the groupcast communication is communication for a target group, the target service type is a service type for initiating establishment of the target group, the group establishment request message is used to request to establish the target group, the group establishment request message includes a group identifier allocated by the first terminal device to the target group, information that is about the target group and that is in an application layer, and a third identifier, and the third identifier is a source identifier allocated by the first terminal device to a unicast connection between the first terminal device and another terminal device in the target group. The first terminal device receives a group establishment request accept message fed back by a second terminal device, where the group establishment request accept message is sent by using a second identifier as a source identifier and using the group identifier as a destination identifier, the second identifier is a source identifier allocated to the groupcast communication by the second terminal device, the group establishment request accept message includes a fourth identifier, and the fourth identifier is a source identifier allocated by the second terminal device to a unicast connection between the second terminal device and the first terminal device.

According to the communication method provided in this application, the first terminal device may establish a unicast connection to a terminal device in a group in a group establishment process, so that transmission of AS configuration information can be implemented after the unicast connection is established.

With reference to the seventh aspect, in some implementations of the seventh aspect, the method further includes: The first terminal device sends first access stratum AS configuration information to the second terminal device by using the third identifier as a source identifier and using the fourth identifier as a destination identifier.

According to the method, the first terminal device may perform transmission of the AS configuration information through the unicast connection between the first terminal device and the second terminal device.

With reference to the seventh aspect, in some implementations of the seventh aspect, the first AS configuration information is used by the second terminal device to determine a first feedback resource, and the first feedback resource is used by the second terminal device to perform hybrid automatic repeat request HARQ feedback on the groupcast communication initiated by the first terminal device.

With reference to the seventh aspect, in some implementations of the seventh aspect, the first AS configuration information is further used by the second terminal device to determine at least one second feedback resource, the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the seventh aspect, in some implementations of the seventh aspect, the method further includes: The first terminal device sends at least one piece of second AS configuration information to the second terminal device by using the third identifier as a source identifier and using the fourth identifier as a destination identifier, where the at least one piece of second AS configuration information is in a one-to-one correspondence with the terminal device other than the second terminal device in the target group, second AS configuration information corresponding to a third terminal device is used by the third terminal device to determine at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is any terminal device other than the second terminal device in the target group.

With reference to the seventh aspect, in some implementations of the seventh aspect, the method further includes: The first terminal device receives third AS configuration information sent by the second terminal device.

With reference to the seventh aspect, in some implementations of the seventh aspect, the third AS configuration information is used by the first terminal device to determine a second feedback resource, and the second feedback resource is used by the first terminal device to perform hybrid automatic repeat request HARQ feedback on the groupcast communication initiated by the second terminal device.

According to an eighth aspect, a communication method is provided, and includes: A second terminal device receives a group establishment request message broadcast by a first terminal device, by using, as a destination identifier, a default identifier corresponding to a target service type, where the first terminal device and the second terminal device belong to a target group, groupcast communication is communication for a target group, the target service type is a service type for initiating establishment of the target group, the group establishment request message is used to request to establish the target group, the group establishment request message includes a group identifier allocated to the target group by the first terminal device, information that is about the target group and that is in an application layer, and a third identifier, and the third identifier is a source identifier allocated by the first terminal device to a unicast connection between the first terminal device and another terminal device in the target group. The second terminal device sends a group establishment request accept message to the first terminal device by using a second identifier as a source identifier and using the group identifier as a destination identifier, where the second identifier is a source identifier allocated to the groupcast communication by the second terminal device, the group establishment request accept message includes a fourth identifier, the fourth identifier is a source identifier allocated by the second terminal device to a unicast connection between the second terminal device and the first terminal device.

According to the communication method provided in this application, the first terminal device may establish a unicast connection to a terminal device in a group in a group establishment process, so that transmission of AS configuration information can be implemented after the unicast connection is established.

With reference to the eighth aspect, in some implementations of the eighth aspect, the method further includes: The second terminal device receives, by using the third identifier as a source identifier and using the fourth identifier as a destination identifier, first access stratum AS configuration information sent by the first terminal device.

According to the method, the first terminal device may perform transmission of the AS configuration information through the unicast connection between the first terminal device and the second terminal device.

With reference to the eighth aspect, in some implementations of the eighth aspect, the method further includes: The second terminal device determines at least one second feedback resource based on the first AS configuration information, where the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.

With reference to the eighth aspect, in some implementations of the eighth aspect, the method further includes: The second terminal device receives, by using the third identifier as a source identifier and using the fourth identifier as a destination identifier, at least one piece of second AS configuration information sent by the first terminal device. The second terminal device determines, based on the second AS configuration information, a feedback resource corresponding to any terminal device other than the second terminal device in the target group, where a feedback resource of a third terminal device includes at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is the any terminal device other than the second terminal device in the target group.

With reference to the eighth aspect, in some implementations of the eighth aspect, the method further includes: The second terminal device sends third AS configuration information to the first terminal device by using the fourth identifier as a source identifier and using the third identifier as a destination identifier.

With reference to the eighth aspect, in some implementations of the eighth aspect, the third AS configuration information is used by the first terminal device to determine a fourth feedback resource, and the fourth feedback resource is used by the first terminal device to perform hybrid automatic repeat request HARQ feedback on the groupcast communication initiated by the second terminal device.

According to a ninth aspect, a communication method is provided, and includes: A first terminal device broadcasts a group establishment request message by using a first identifier as a source identifier and using, as a destination identifier, a default identifier corresponding to a target service type, where
the first identifier is a source identifier allocated to groupcast communication by the first terminal device, the groupcast communication is communication for a target group, the target service type is a service type for initiating establishment of the target group, the group establishment request message is used to request to establish the target group, and the group establishment request message includes a group identifier allocated to the target group by the first terminal device and information that is about the target group and that is in an application layer.

The first terminal device receives a group establishment request accept message fed back by another terminal device in the target group.

According to the method, the first terminal device may establish the target group.

According to a tenth aspect, a communication method is provided, and includes: A second terminal device receives a group establishment request message broadcast by a first terminal device, where the group establishment request message is used to request to establish a target group, and the group establishment request message includes a group identifier allocated to the target group by a V2X layer of the first terminal device and information that is about the target group and that is in an application layer.

The second terminal device sends a group establishment request accept message to the first terminal device by using a second identifier as a source identifier and using the group identifier as a destination identifier, where the first identifier is a source identifier allocated to groupcast communication by the first terminal device, the second identifier is a source identifier allocated to the groupcast communication by the second terminal device, and the groupcast communication is communication for the target group.

According to the method, the second terminal device may join the target group.

According to an eleventh aspect, a communication method is provided, and includes: A first terminal device sends AS configuration information to a second terminal device, and starts a first timer associated with a unicast connection between the first terminal device and the second terminal device. During running of the first timer, if the first terminal device receives a response message sent by the second terminal device for the AS configuration information, the first terminal device stops the first timer; or when the first timer expires, if the first terminal device does not receive a response message sent by the second terminal device for the AS configuration information, the first terminal device determines that configuration based on the AS configuration information fails.

According to the communication method provided in this application, the timer (namely, the first timer) associated with the unicast connection is introduced, so that when the first terminal device does not receive a response message sent by the second terminal device for the AS configuration information, content related to the unicast connection can be processed in time, to avoid long-time interruption of a service.

With reference to the eleventh aspect, in some implementations of the eleventh aspect, the starting a first timer associated with a unicast connection between the first terminal device and the second terminal device includes: The first terminal device starts the first timer when an RRC entity of the first terminal device generates a sidelink RRC message and sends the sidelink RRC message to a bottom layer of the RRC entity, where the RRC message includes the AS configuration information.

It should be understood that the bottom layer of the RRC entity is a lower layer of an RRC layer.

With reference to the eleventh aspect, in some implementations of the eleventh aspect, the method further includes: When the first timer expires, the first terminal device sends indication information to a network device, where the indication information is used to indicate that the first timer expires.

With reference to the eleventh aspect, in some implementations of the eleventh aspect, when the first timer expires, if the first terminal device does not receive the response message sent by the second terminal device for the AS configuration information, the method further includes one or more of the following: The first terminal device stops performing transmission to the second terminal device through the unicast connection; the first terminal device releases a transmission buffer of the unicast connection, where the transmission buffer includes one or more of the following: a to-be-sent resource request (source request, SR), a to-be-sent buffer status report BSR, or to-be-sent data; an AS of the first terminal device indicates, to an upper layer, that when the first timer expires, the first terminal device does not receive the response message sent by the second terminal device for the AS configuration information, where the upper layer is a vehicle to everything V2X layer or an application layer; when the V2X layer receives the indication sent by the AS, the V2X layer initiates a unicast connection release procedure, and the V2X layer indicates the AS to release an AS configuration of the unicast connection; the AS releases the AS configuration of the unicast connection, and indicates to the V2X layer that the AS has released the AS configuration of the unicast connection; or the AS indicates to the application layer that a sidelink of the unicast connection is unavailable.

With reference to the eleventh aspect, in some implementations of the eleventh aspect, when the first timer expires, if the first terminal device does not receive the response message sent by the second terminal device for the AS configuration information, the method further includes: The first terminal device performs link restoration on the unicast connection.

With reference to the eleventh aspect, in some implementations of the eleventh aspect, that the first terminal device performs link restoration on the unicast connection includes: The first terminal device performs link restoration on the unicast connection, and starts a second timer. The method further includes: stopping the second timer if the link restoration performed on the unicast connection succeeds during running of the second timer.

According to a twelfth aspect, a communication apparatus is provided, and includes modules or units configured to perform the method in any one of the first aspect to the eleventh aspect and the possible implementations of the first aspect to the eleventh aspect.

According to a thirteenth aspect, an apparatus is provided, and includes a processor. The processor is coupled to a memory, and may be configured to execute instructions in the memory, to enable the apparatus to perform the method in any one of the first aspect to the eleventh aspect and the possible implementations of the first aspect to the eleventh aspect. Optionally, the apparatus further includes the memory. Optionally, the apparatus further includes an interface circuit, and the processor is coupled to the interface circuit.

According to a fourteenth aspect, a processor is provided, and includes an input circuit, an output circuit, and a processing circuit. The processing circuit is configured to: receive a signal through the input circuit, and transmit a signal through the output circuit, so that the processor performs the method in any one of the first aspect to the eleventh aspect and the possible implementations of the first aspect to the eleventh aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in the embodiments of this application.

According to a fifteenth aspect, a processing apparatus is provided, and includes a processor and a memory. The processor is configured to: read instructions stored in the memory, receive a signal through a receiver, and transmit a signal through a transmitter, to perform the method in any one of the first aspect to the eleventh aspect and the possible implementations of the first aspect to the eleventh aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in the embodiments of this application.

The processing apparatus in the fourteenth aspect may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated in the processor, or may be located outside the processor and exist independently.

According to a sixteenth aspect, a computer program product is provided. The computer program product includes a computer program (which may also be referred to as code or instructions). When the computer program is run, a computer is enabled to perform the method in any one of the first aspect to the eleventh aspect and the possible implementations of the first aspect to the eleventh aspect.

According to a seventeenth aspect, a computer-readable storage medium is provided. The computer-readable storage medium stores a computer program (which may also be referred to as code or instructions). When the computer program is run on a computer, the computer is enabled to perform the method in any one of the first aspect to the eleventh aspect and the possible implementations of the first aspect to the eleventh aspect.

According to an eighteenth aspect, a communication system is provided, and includes the foregoing first terminal device and/or second terminal device.

### BRIEF DESCRIPTION OF DRAWINGS

FIG. 1 is a schematic diagram of a V2X communication architecture;
FIG. 2 is a schematic diagram of V2X groupcast communication;
FIG. 3 is a schematic flowchart of a communication method according to this application;
FIG. 4 is a schematic flowchart of a communication method according to this application;
FIG. 5 is a schematic flowchart of a communication method according to this application;
FIG. 6 is a schematic flowchart of a communication method according to this application;
FIG. 7 is a schematic flowchart of a communication method according to this application;
FIG. 8 is a schematic diagram of a structure of a communication apparatus according to this application;
FIG. 9 is a schematic diagram of a structure of a terminal device according to this application; and
FIG. 10 is a schematic diagram of a structure of another communication apparatus according to this application.

### DESCRIPTION OF EMBODIMENTS

The following describes technical solutions of this application with reference to the accompanying drawings.

The technical solutions provided in this application may be used in a device to device (device to device, D2D) scenario, and optionally, may be used in a vehicle to everything (vehicle to everything, V2X) scenario. For example, the V2X scenario may be specifically any one of the following systems: vehicle to vehicle (vehicle to vehicle, V2V) communication, vehicle to pedestrian (vehicle to pedestrian, V2P) communication, a vehicle to network (vehicle to network, V2N) service, vehicle to infrastructure (vehicle to infrastructure, V2I) communication, and the like.

For example, D2D may be long term evolution (long term evolution, LTE) D2D or new radio (new radio, NR) D2D, or may be D2D in another communication system that may appear with development of technologies. Similarly, V2X may be LTE V2X or NR V2X, or may be V2X in another communication system that may appear with development of technologies.

In the embodiments of this application, a terminal device may be, for example, user equipment (user equipment, UE), a vehicle, a vehicle-mounted sensor, an on board unit (on board unit, OBU), a road side unit (road side unit, RSU), a subscriber unit, a subscriber station, a mobile station, a mobile console, a remote station, a remote terminal, a mobile device, a user terminal, a terminal, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, or a wearable device.

It should be understood that, in the embodiments of this application, the terminal device may be alternatively a chip, a communication apparatus with a D2D or V2X communication function, a unit, a module, or the like in a terminal device, for example, an in-vehicle communication apparatus, an in-vehicle communication module, or an in-vehicle communication chip.

It should be noted that, to make a person skilled in the art better understand this application, the following describes this application by using an example in which the terminal device is UE. However, it should be understood that the UE may be replaced with a terminal device (or a chip or a circuit in the terminal device) in another form, for example, a vehicle-mounted device or a wearable device.

A base station in this application refers to a network device, a chip or a circuit configured in the network device, or the like. The network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G system such as an NR system, may be one antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

In some deployments, the gNB may include a centralized unit (centralized unit, CU) and a DU. The gNB may further include an active antenna unit (active antenna unit, AAU for short). The CU implements some functions of the gNB, and the DU implements some other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, or an AAU node. In addition, the CU may be classified into a network device in a radio access network (radio access network, RAN), or may be classified into a network device in a core network (core network, CN). This is not limited in this application. This application may be applied to a plurality of application scenarios, such as D2D, relay (Relay), a wireless mesh (Mesh) network, integrated access & backhaul (integrated access & backhaul, IAB), vehicle to everything (vehicle to everything, V2X), UE collaboration, high-frequency transmission, an industrial scenario, robot collaboration, and the internet of things.

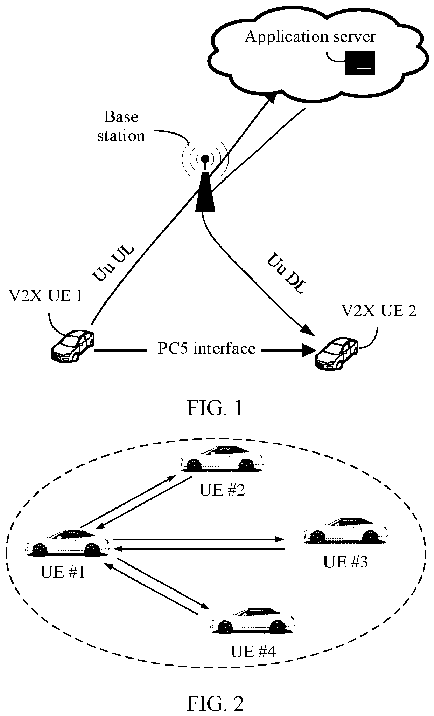

FIG. 1 is a schematic diagram of a V2X communication architecture. As shown in FIG. 1, the architecture includes two types of communication interfaces: a PC5 interface and a Uu interface. The PC5 interface is a direct communication interface between UEs (for example, V2X UE 1 and V2X UE 2 shown in the figure) that each have a V2X communication function. A direct communication link between V2X UEs is also defined as a sidelink (sidelink, SL). Uu interface communication is a communication mode in which sender V2X UE (for example, the V2X UE 1) sends V2X data to a base station through the Uu interface, the base station sends the data to a V2X application server for processing, the V2X application server delivers processed data to a base station, and then the base station sends the data to receiver V2X UE (for example, the V2X UE 2). In the Uu interface communication mode, the base station that forwards uplink data of the sender V2X UE to the application server and the base station that forwards downlink data delivered by the application server to the receiver V2X UE may be a same base station, or may be different base stations. This may be specifically determined by locations of the V2X UEs. It should be understood that the sending performed by the sender V2X UE to the base station is referred to as uplink (uplink, UL) transmission, and the sending performed by the base station to the receiver V2X UE is referred to as downlink (downlink, DL) transmission.

NR V2X supports groupcast communication. As shown in FIG. 2, one group may include N (N≥2) UEs, such as UE #1, UE #2, UE #3, and UE #4 shown in the figure. In a group, there may be a requirement for transmission of AS-related information, that is, there may be a scenario in which information transmission is not triggered by an APP layer. For example, after one UE in the group groupcasts data, the other UEs need to perform HARQ feedback. In this case, these UEs need to know what resources are used to perform HARQ feedback. According to a current technology, a unicast connection can be triggered only by the APP layer, and there is no solution in which a unicast connection or groupcast is triggered by an AS. Therefore, the UEs cannot learn of the resources for performing HARQ feedback.

To resolve the foregoing problem, this application provides a communication method. When there is no service transmission in the APP layer, a unicast connection between UEs in a group can be established, to perform transmission of the AS-related information, for example, information indicating a resource for HARQ feedback. Alternatively, when there is no service transmission in the APP layer, PC5-S signaling of the groupcast communication may also be used to perform transmission of the AS-related information. The following describes the solutions provided in this application.

It should be noted that in this specification, UE initiating establishment of a target group is referred to as "leader (leader) UE", and another UE in the target group is referred to as "member UE". It should be noted that a meaning of the "leader UE" in this specification may be different from that of "leader UE" in a current technology. The leader UE in this specification is only UE initiating establishment of a group, and may not have another function of the leader UE in the current technology. That is, the leader UE in this specification may be or may not be the leader UE in the current technology.

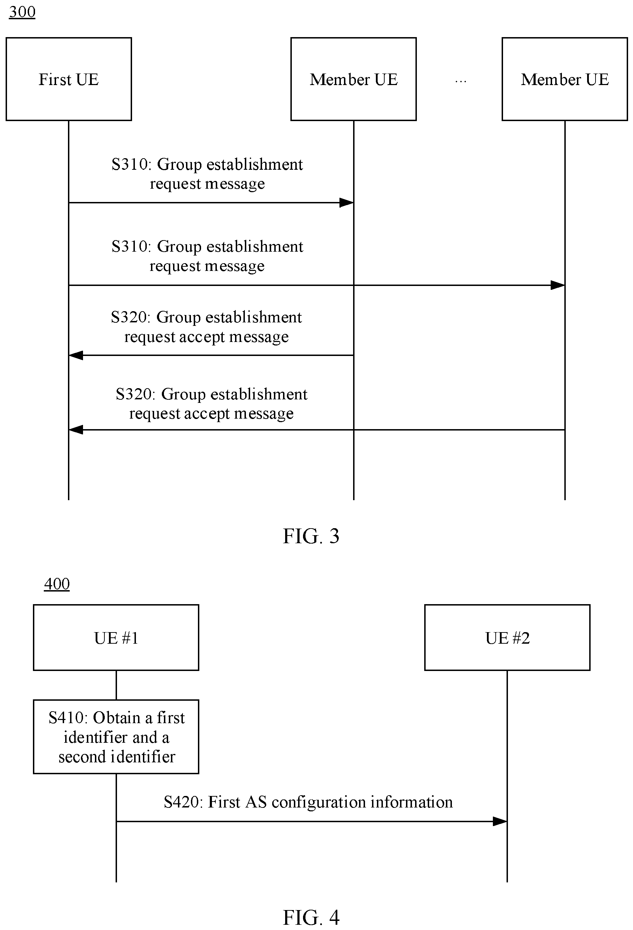

FIG. 3 is a schematic flowchart of a communication method 300 according to this application. By using the method 300, a group may be established to implement groupcast communication. It should be understood that, in the method 300, first UE may correspond to a first terminal device, second UE may correspond to a second terminal device, an identifier #1 may correspond to a first identifier, and an identifier #2 may correspond to a second identifier. However, this is not limited in this application.

Refer to FIG. 3. The method 300 may include S310 and S320. The following describes the steps.

S310: The first UE broadcasts a group establishment request message.

For a service type, when the first UE needs to initiate groupcast communication, the first UE may first establish a group for the service type. After establishing the group, the first UE may perform groupcast communication.

For example, when the first UE needs to initiate groupcast communication for a target service type, the first UE may first broadcast a group establishment request message to establish a target group. Specifically, the first UE may allocate a source identifier (denoted as the identifier #1) and a group identifier (denoted as a group identifier) to the groupcast communication. The identifier #1 may be used as a layer 2 (layer 2, L2) source ID used when the first UE initiates the groupcast communication, and the group identifier may be used as a destination identifier used when the first UE initiates the groupcast communication, namely, an L2 Destinations ID. The first UE broadcasts the group establishment request message by using the identifier #1 as a source identifier and using, as a destination identifier, a default identifier corresponding to the target service type. The group establishment request message includes information that is about the group identifier and/or the target group and that is in an application layer. The information about the target group in the application layer may be, for example, an identifier of the group in the application layer. It should be understood that, if the group establishment request message carries the information about the target group in the application layer, based on the information about the target group in the application layer, UE in the group may determine, through mapping according to a same mapping rule, a group identifier corresponding to the target group.

It should be understood that "the first UE broadcasts the group establishment request message by using the identifier #1 as a source identifier and using, as a destination identifier, a default identifier corresponding to the target service type" means that when processing the group establishment request message in a MAC layer, the first UE encapsulates, in a corresponding MAC PDU header, the identifier #1 used as the source identifier, and the default identifier that is corresponding to the target service and that is used as the destination identifier, and then transfers the corresponding MAC PDU header to a physical layer for processing and sending.

S320: Member UE replies with a group establishment request accept message.

After the member UE receives the group establishment request message, if the member UE determines, based on information carried in the group establishment request message, that the target group is a group to which the member UE needs to join, the member UE allocates a source identifier to the target group or to groupcast communication for the target group. In addition, each member UE replies with a group establishment request accept message by using, as a source identifier, an identifier allocated to the groupcast communication by the member UE and using the group identifier as a destination identifier. For example, after the second UE receives the group establishment request message, if the second UE determines to join the target group, the second UE allocates a source identifier (denoted as the identifier #2) to the groupcast communication, and replies with a group establishment request accept message to the first UE by using the identifier #2 as a source identifier and using the group identifier as a destination identifier. In this case, the second UE is member UE.

It should be understood that "the second UE replies with a group establishment request accept message by using the identifier #2 as a source identifier and using the group identifier as a destination identifier" means that when processing the group establishment request accept message in a MAC layer, the second UE encapsulates, in a corresponding MAC PDU header, the identifier #2 used as the source identifier, uses the group identifier as the destination identifier, encapsulates a first part of the destination identifier in the corresponding MAC PDU header, and then transfers the MAC PDU to a physical layer for processing. Further, in the physical layer, the remaining part of the destination identifier is encapsulated in physical layer information, specifically, may be encapsulated in SCI generated in the physical layer, and finally sent. In addition, in unicast communication, sending may also be performed in the foregoing manner.

Then, any UE in the target group may initiate groupcast communication by using, as a source identifier, a source identifier allocated to the groupcast communication by the UE and using the group identifier as a destination identifier. For example, the first UE may use the identifier #1 as a source identifier and use the group identifier as a destination identifier to groupcast data to member UE. For another example, the second UE may use the identifier #2 as a source identifier and use the group identifier as a destination identifier to groupcast data to the first UE and member UE other than the second UE.

It should be understood that a manner in which UE in the target group performs groupcast communication by using a source identifier and a destination identifier is the same as the foregoing manner in which the second UE sends the group establishment request accept message by using the source identifier and the destination identifier. Details are not described herein again.

In conclusion, according to the communication method provided in this application, a group may be established, to implement groupcast communication.

The following describes communication methods respectively shown in FIG. 4 to FIG. 6.

It should be noted that the methods shown in FIG. 4 to FIG. 6 all meet the following descriptions:
(1) UE #1 corresponds to a first terminal device, and UE #2 corresponds to a second terminal device. A first identifier is a source identifier allocated to groupcast communication for a target group by the UE #1, and a second identifier is a source identifier allocated to the groupcast communication for the target group by the UE #2.

The UE #1 may be leader UE, and the UE #2 may be any member UE. For example, the UE #1 may be the first UE in the method 300, and the UE #2 may be the second UE in the method 300. It may be understood that when the UE #1 is the first UE, and the UE #2 is the second UE, the first identifier may correspond to the identifier #1 in the method 300, and the second identifier may correspond to the identifier #2 in the method 300.

Alternatively, the UE #1 and the UE #2 may be any two member UEs. For example, the UE #1 and the UE #2 may be any two member UEs in the group described in the method 300.

Alternatively, the UE #1 may be any member UE, and the UE #2 may be leader UE. For example, the UE #1 may be the second UE in the foregoing descriptions, and the UE #2 may be the first UE in the method 300. It may be understood that when the UE #1 is the second UE, and the UE #2 is the first UE, the first identifier may correspond to the identifier #2 in the method 300, and the second identifier may correspond to the identifier #1 in the method 300.
(2) Unless otherwise specified, the "groupcast communication" is the groupcast communication for the target group.
(3) The target group may be established by using the method 300, may be established by using another method, or may be learned of by using another method. Regardless of a method used to establish or learn of the target group, each UE in the target group may allocate a source identifier to the groupcast communication, and the UE #1 may obtain the source identifier allocated to the groupcast communication by each UE in the target group and a group identifier corresponding to the target group. For example, when the target group is established by using the method 300, if the UE #1 is not the leader UE, the UE #1 may, after determining to join the group, initiate a separate request procedure to obtain the source identifier allocated to the groupcast communication by each UE in the target group. For another example, any UE in the group may obtain, from an application layer of the UE, information about the target group in the application layer and information about a group member in the application layer. Based on the information about the target group in the application layer, the UE in the group may determine, through mapping, the group identifier corresponding to the target group. Based on the information about the group member in the application layer, the UE in the group may determine, through mapping, source identifiers (equivalent to source identifiers allocated for the groupcast communication) of all UEs in the group. In this case, when performing a behavior of the foregoing mapping, all the UEs in the group follow a unified algorithm, so that information determined through mapping by all the UEs in the group is consistent with each other. It should be understood that for steps related to obtaining the first identifier and/or the second identifier in the following, reference may be made to the descriptions herein.
(4) Initiating the groupcast communication by the any UE in the target group means that the UE groupcasts data to another UE in the target group. Correspondingly, that one UE in the target group performs HARQ feedback on groupcast communication initiated by another UE means that the one UE in the target group performs HARQ feedback on a transport block (transport block, TB) corresponding to data groupcast by the another UE.
(5) The following mainly describes interaction between the UE #1 and the UE #2. In practice, for interaction between the UE #1 and another UE, reference may be made to the interaction between the UE #1 and the UE #2.

FIG. 4 shows a communication method 400. The method 400 may include S410 and S420. The following describes the steps shown in FIG. 4.

S410: UE #1 obtains a first identifier and a second identifier.

S420: The UE #1 sends first AS configuration information to UE #2 by using the first identifier as a source identifier and using the second identifier as a destination identifier.

Correspondingly, the UE #2 receives the first AS configuration information by using the first identifier as a source identifier and using the second identifier as a destination identifier. In other words, if the UE #2 receives the first AS configuration information sent by using the first identifier as the source identifier and using the second identifier as the destination identifier, the UE #2 may determine that the first AS configuration information is sent to the UE #2, and the first AS configuration information is applied to a target group. The first AS configuration information is AS-related information, or the first AS configuration information is used to configure an AS.

Optionally, the first AS configuration information may be sent through sidelink radio resource control (radio resource control, RRC) signaling. It should be understood that the UE #1 may establish a signaling radio bearer (signaling radio bearer, SRB) with the UE #2 by using the first identifier as a source identifier and using the second identifier as a destination identifier, and may send the sidelink RRC signaling through the SRB.

In a first example, the first AS configuration information may be used by the UE #1 to determine a first feedback resource or determine information about the first feedback resource. In other words, the UE #1 may determine the first feedback resource based on the first AS configuration information. The first feedback resource may be used by the UE #2 to perform HARQ feedback on groupcast communication initiated by the UE #1. For example, the first AS configuration information may include an index #1 (or an ID), and the UE #1 may determine the first feedback resource based on the index #1. Optionally, the first AS configuration information may further include the second identifier.

For example, a feedback resource (for example, the first feedback resource, or the following second feedback resource, third feedback resource, or fourth feedback resource) may include at least one of a time domain resource, a frequency domain resource, and a code resource. For example, the time domain resource may include one or more of a start symbol location, a quantity of occupied symbols, an end location, a periodicity, or the like. The frequency domain resource may include one or more of a start frequency domain location, a quantity of occupied subchannels, an end frequency domain location, or the like. The code resource may be, for example, code used for HARQ feedback or a sequence used for HARQ feedback.

In an implementation, the UE #2 may determine the first feedback resource based on the first AS configuration information and a resource used for the groupcast communication initiated by the UE #1. For example, the first AS configuration information may indicate a relationship between a start location of the first feedback resource in time domain/frequency domain and end locations of a time domain resource and a frequency domain resource that are used for the groupcast communication initiated by the UE #1. It may be understood that there is at least one feedback resource corresponding to the resource used for the groupcast communication initiated by the UE #1, and the UE #2 may first determine the at least one feedback resource based on the resource used for the groupcast communication initiated by the UE #1, and further determine, in the at least one feedback resource based on the first AS configuration information, a feedback resource that can be used by the UE #2, namely, the first feedback resource.

In another implementation, the UE #2 may determine the first feedback resource based on indication information of the UE #1 and the first AS configuration information. For example, the UE #1 includes indication information in sidelink control information (sidelink control information, SCI). The indication information indicates at least one feedback resource corresponding to the groupcast communication. The UE #2 receives the indication information, determines the at least one feedback resource, and determines, in the at least one feedback resource based on the first AS configuration information, a feedback resource that can be used by the UE #2, namely, the first feedback resource.

In still another implementation, the UE #2 may determine the first feedback resource in a preconfigured resource based on the first AS configuration information. For example, the UE #2 may determine the first feedback resource based on a predefined correspondence between an index value and a feedback resource.

For the first example, it may be understood that UEs other than the UE #1 and the UE #2 in the target group may each send one piece of information to the UE #2. The information may be used by the UE # 1 to determine a resource for performing HARQ feedback on the groupcast communication initiated by corresponding UE. For example, the target group further includes UE #3 and UE #4. In this case, the UE #3 may send information #1 to the UE #2, where the information #1 may be used by the UE #2 to determine a resource for performing HARQ feedback on the groupcast communication initiated by the UE #3; and the UE #4 may send information # 2 to the UE #2, where the information # 2 may be used by the UE #2 to determine a resource for performing HARQ feedback on the groupcast communication initiated by the UE #4. It should be understood that, when sending the information, each UE uses, as a source identifier, an identifier allocated to the groupcast communication by the UE, and uses the second identifier as a destination identifier.

It may be further understood that the UE #2 may separately send one piece of information to the other UEs in the target group, where each piece of information is used by corresponding UE to determine a resource for performing HARQ feedback on the groupcast communication initiated by the UE #2.

For example, the UE #2 may send third AS configuration information to the UE #1 by using the second identifier as a source identifier and using the first identifier as a destination identifier. Correspondingly, the UE #1 may receive the third AS configuration information by using the second identifier as a source identifier and using the first identifier as a destination identifier. The third AS configuration information may be used by the UE #1 to determine a fourth feedback resource, and the fourth feedback resource is used by the UE # 1 to determine to perform HARQ feedback on the groupcast communication initiated by the UE #2.

In a second example, in addition to being used by the UE #1 to determine the first feedback resource, the first AS configuration information may be further used by the UE #2 to determine at least one second feedback resource. The at least one second feedback resource is in a one-to-one correspondence with UE other than the UE #2 in the target group, and any second feedback resource is used by the UE #2 to perform HARQ feedback on the groupcast communication initiated by UE corresponding to the second feedback resource.

In other words, the UE #2 may determine, based on the first AS configuration information, a resource for performing HARQ feedback on the groupcast communication initiated by all UEs other than the UE #2 in the target group. For example, the UE #1 may determine, based on the index #1, a resource for performing HARQ feedback on the groupcast communication initiated by all UEs other than the UE # 1 in the target group.

It should be understood that a manner in which the UE #2 determines any second feedback resource may be similar to a manner in which the UE #1 determines the first feedback resource, and details are not described herein again. In addition, when performing HARQ feedback on the groupcast communication initiated by different UEs in the target group, the UE #2 may use a same resource or may use different resources. This is not limited in this application. In other words, the at least one second feedback resource may be the same, and the at least one second feedback resource may be the same as the first feedback resource. Alternatively, the at least one second feedback resource and the first feedback resource are different from each other.

In a third example, in addition to sending the first AS configuration information, the UE #1 may further send at least one piece of second AS configuration information to the UE #2 by using the first identifier as a source identifier and using the second identifier as a destination identifier.

Correspondingly, the UE #2 receives the at least one piece of second AS configuration information by using the first identifier as a source identifier and using the second identifier as a destination identifier. In other words, if the UE #2 receives the at least one piece of second AS configuration information sent by using the first identifier as the source identifier and using the second identifier as the destination identifier, the UE #2 may determine that the at least one piece of second AS configuration information is sent to the UE #2, and the at least one piece of second AS configuration information is applied to the target group. The second AS configuration information is AS-related information, or the second AS configuration information is used to configure an AS.

It should be understood that the first AS configuration information and the at least one piece of second AS configuration information may be sent through a same message. For example, the first AS configuration information and the at least one piece of second AS configuration information may be included in an AS configuration information message. The first AS configuration information and the at least one piece of second AS configuration information may be respectively sent through two messages. This is not limited in this application.

For example, the at least one piece of second AS configuration information is in a one-to-one correspondence with the UE other than the UE #2 in the target group. Second AS configuration information corresponding to the UE #3 is used by third UE to determine at least one third feedback resource, where the at least one third feedback resource is in a one-to-one correspondence with UE other than the third UE in the target group. Any third feedback resource is used by the third UE to perform HARQ feedback on the groupcast communication initiated by UE corresponding to the third feedback resource, and the third UE is any UE other than the UE #2 in the target group.

In other words, the UE #2 may determine, based on the second AS configuration information, resources for performing HARQ feedback on the groupcast communication initiated by all UEs other than the UE #2 for another UE. For example, it is assumed that the target group includes the UE #1, the UE #2, the UE #3, and the UE #4. In this case, based on the second AS configuration information, the UE #2 may determine a resource used by the UE #1 to perform HARQ feedback when the UE #2, the UE #3, and the UE #4 separately initiate the groupcast communication, determine a resource used by the UE #3 to perform HARQ feedback when the UE #1, the UE #2, and the UE #4 separately initiate the groupcast communication, and determine a resource used by the UE #4 to perform HARQ feedback when the UE #1, the UE #2, and the UE #3 separately initiate the groupcast communication.

It should be understood that a manner for determining the third feedback resource may be similar to the manner for determining the first feedback resource, and details are not described herein again. In addition, for different UEs in the target group, when HARQ feedback is performed on the groupcast communication initiated by same UE, a same resource or different resources may be used. This is not limited in this application.

For example, the second AS configuration information may further include an index. However, this is not limited in this application. Optionally, the second AS configuration information may further include a source identifier allocated to the groupcast communication by UE corresponding to the second AS configuration information.

For example, in this application, the first AS configuration information may further include configuration information related to the target group, including one or more of a receiving resource pool configuration, a sending resource pool configuration, a synchronization source configuration, or a bearer configuration.

In conclusion, according to the communication method provided in this application, an identifier allocated to the groupcast communication by each UE during group establishment may be used, to implement unicast communication between UEs in a group, so that transmission of AS configuration information can be implemented. This method does not require an additional unicast connection establishment procedure, and is simple to implement.

It should be understood that, according to the descriptions of the method 400, the UE #1 and the UE #2 perform unicast communication by using the source identifiers allocated to the groupcast communication by the UE #1 and the UE #2 respectively. Actually, any two UEs in the target group may perform unicast communication by using source identifiers allocated to the groupcast communication by the two UEs respectively. Details are not described one by one in this specification.

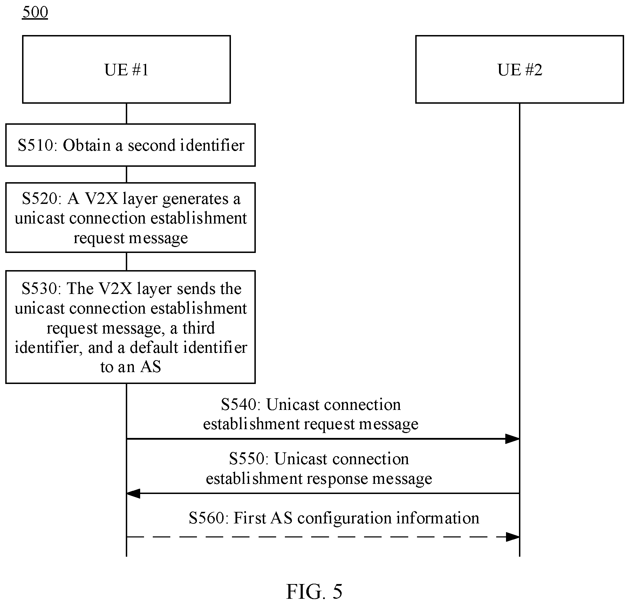

FIG. 5 shows a communication method 500. The method 500 may include S510 to S550. The following describes the steps shown in FIG. 5.

S510: UE #1 obtains a second identifier.

S520: A V2X layer of the UE #1 generates a unicast connection establishment request message.

In an implementation, the unicast connection establishment request message may include a group identifier.

In another implementation, the unicast connection establishment request message may include the second identifier. Optionally, the unicast connection establishment request message may further include a group identifier.

Optionally, the generation of the unicast connection establishment request message may be triggered by the V2X layer, or may be triggered by an AS.

If the triggering is performed by the AS, the AS may first send indication information to the V2X layer, and the V2X layer may generate the unicast connection establishment request message based on the indication information.

Corresponding to the foregoing first implementation, the indication information includes the group identifier.

Corresponding to the foregoing second implementation, the indication information includes the second identifier.

S530: The V2X layer of the UE #1 sends the unicast connection establishment request message, a third identifier, and a default identifier corresponding to a target service type to the AS of the UE #1.

The third identifier is a source identifier allocated by the UE #1 to a unicast connection that the unicast connection establishment request message requests to establish.

S540: The AS of the UE #1 broadcasts the unicast connection establishment request message.

The AS of the UE #1 broadcasts the unicast connection establishment request message by using the third identifier as a source identifier and using, as a destination identifier, the default identifier corresponding to the target service type.

S550: UE #2 sends a unicast connection establishment response message to the UE #1.

Corresponding to the first implementation described in S510, after receiving the unicast connection establishment request message, if determining to establish a unicast connection to the UE #1, any UE in a target group may allocate a source identifier to the unicast connection, and generate a unicast connection establishment response message. For example, for the UE #2, if the UE #2 determines to establish the unicast connection to the UE #1, the UE #2 may allocate a source identifier (denoted as a fourth identifier) to the unicast connection, and generate the unicast connection establishment response message. Then, the UE #2 sends the unicast connection establishment response message in a unicast communication manner by using the fourth identifier as a source identifier and using the third identifier as a destination identifier. After receiving the unicast connection establishment response message, the UE #1 may determine that the unicast connection establishment is completed, and then may perform unicast communication with the UE #2 by using the unicast connection identified by the third identifier and the fourth identifier.

Corresponding to the second implementation described in S510, after parsing the unicast connection establishment request message, a V2X layer of the UE #2 obtains the second identifier in the unicast connection establishment request message. In this case, the UE #2 may determine that the unicast connection establishment request message is sent to the UE #2. In this case, if the UE #2 determines to establish the unicast connection to the UE #1, the UE #2 may allocate a source identifier, namely, a fourth identifier, to the unicast connection, and generate the unicast connection establishment response message. Then, the UE #2 sends the unicast connection establishment response message by using the fourth identifier as a source identifier and using the third identifier as a destination identifier. After receiving the unicast connection establishment response message, the UE #1 may determine that the unicast connection establishment is completed, and then may perform unicast communication with the UE #2 by using the unicast connection identified by the third identifier and the fourth identifier. Therefore, the method may further include the following step:

S560: The UE #1 sends first AS configuration information to the UE #2 by using the third identifier as a source identifier and the fourth identifier as a destination identifier.

Correspondingly, the UE #2 receives the first AS configuration information by using the third identifier as a source identifier and using the fourth identifier as a destination identifier.

For the first AS configuration information, refer to the foregoing descriptions of the first AS configuration information. Details are not described herein again.

It should be understood that S510 to S550 describe a procedure of establishing the unicast connection between the UE #1 and the UE #2. In practice, a unicast connection may be established between any two UEs in the target group with reference to the procedure of establishing the unicast connection between the UE #1 and the UE #2. Details are not described again in this specification. It should be noted that, for the second implementation described in S510, the UE #1 may allocate different source identifiers to unicast connections established by the UE #1 to different UEs in the target group. For example, the UE #1 may allocate the third identifier to the UE #2, and allocate a fifth identifier to the UE #3.

It should be further understood that, it is similar to the descriptions of the first example in the method 400 that UEs other than the UE #1 and the UE #2 in the target group may each send one piece of information to the UE #2. The information may be used by the UE #1 to determine a resource for performing HARQ feedback on groupcast communication initiated by corresponding UE. It should be understood that, when sending the information, each UE uses, as a source identifier, a source identifier allocated by the UE to a unicast connection between the UE and the UE #2, and uses, as a destination identifier, a source identifier allocated by the UE #2 to the unicast connection between the UE and the UE #1.

It may be further understood that the UE #2 may separately send one piece of information to the other UEs in the target group, where each piece of information is used by corresponding UE to determine a resource for performing HARQ feedback on the groupcast communication initiated by the UE #2.

For example, the UE #2 may send third AS configuration information to the UE #1 by using the fourth identifier as a source identifier and using the third identifier as a destination identifier. Correspondingly, the UE # 1 may receive the third AS configuration information by using the fourth identifier as a source identifier and using the third identifier as a destination identifier. The third AS configuration information may be used by the UE #1 to determine a fourth feedback resource, and the fourth feedback resource is used by the UE #1 to determine to perform HARQ feedback on the groupcast communication initiated by the UE #2.

It is similar to the third example described in the method 400 that, in the method 500, in addition to sending the first AS configuration information, the UE #1 may further send at least one piece of second AS configuration information to the UE #2 by using the third identifier as a source identifier and using the fourth identifier as a destination identifier. For a meaning of the second AS configuration information, refer to the descriptions of the second AS configuration information in the method 400. Details are not described herein again.

In conclusion, according to the method provided in this application, UEs in a group may establish a unicast connection, to perform unicast communication, so that transmission of AS configuration information can be implemented.

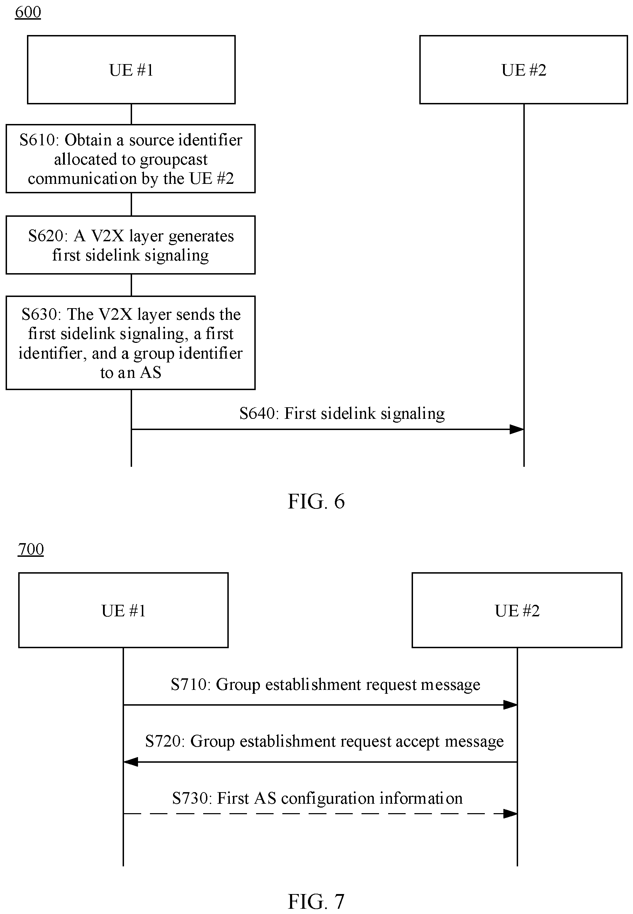

FIG. 6 shows a communication method 600. The method 600 may include S610 to S640. The following describes the steps shown in FIG. 6.

S6 10: UE #1 obtains a source identifier allocated to groupcast communication by UE #2.

Optionally, the UE #1 may further obtain a source identifier allocated to the groupcast communication by a UE other than the UE #2 in a target group.

S620: A V2X layer of the UE #1 generates first sidelink signaling.

In a first manner, the first sidelink signaling may include a source identifier (namely, a second identifier) allocated to the groupcast communication by the UE #2 and AS configuration information of the UE #2.

In a second manner, the first sidelink signaling may include a source identifier allocated to the groupcast communication by each UE in the target group and AS configuration information of each UE.

In a third manner, the first sidelink signaling may include a source identifier list, and the source identifier list includes the source identifier allocated to the groupcast communication by each UE in the target group. A first source identifier and a location of the first source identifier in the source identifier list indicate AS configuration information of UE corresponding to the first source identifier, and the first source identifier is a source identifier allocated to the groupcast communication by any UE in the target group. In other words, any source identifier in the source identifier list and a location of the source identifier in the source identifier list are used by UE corresponding to the source identifier to determine AS configuration information corresponding to the UE.

Optionally, the first sidelink signaling may further include a group identifier.

It should be understood that the first sidelink signaling may also be referred to as PC5-S signaling.

Optionally, generation of the first sidelink signaling may be triggered by the V2X layer, or may be triggered by an AS.

If the triggering is performed by the AS, the AS may first send configuration information to the V2X layer, and the V2X layer may generate the first sidelink signaling based on the configuration information.

Corresponding to the foregoing first manner, the configuration information may include the group identifier, and include the AS configuration information of the UE #2 and the second identifier.

Corresponding to the foregoing second manner, the configuration information may further include the source identifier allocated to the groupcast communication by each UE in the target group and the AS configuration information of each UE.

Corresponding to the foregoing third manner, the configuration information may include the group identifier and the source identifier list.

S630: The V2X layer of the UE #1 sends the first sidelink signaling, a first identifier, and the group identifier to the AS of the UE #1.

S640: The AS of the UE #1 sends the first sidelink signaling by using the first identifier as a source identifier and the group identifier as a destination identifier.

Correspondingly, a V2X layer of each UE in the target group may receive the first sidelink signaling by using the first identifier as a source identifier and the group identifier as a destination identifier. By parsing the first sidelink signaling, the V2X layer of each UE may obtain content in the first sidelink signaling, and may send the obtained content to an AS.

It may be understood that, corresponding to the foregoing first manner, the AS of each UE in the target group may obtain the AS configuration information of the UE #2. Corresponding to the foregoing second manner, the AS of each UE in the target group may obtain the AS configuration information of each UE in the target group. Corresponding to the foregoing third manner, each UE in the target group may obtain the source identifier list.

In a first manner, the AS configuration information of the UE #2 may include first AS configuration information. For details about the first AS configuration information, refer to the foregoing descriptions.

Optionally, the AS configuration information of the UE #2 may further include at least one piece of second AS configuration information. For details about the second AS configuration information, refer to the foregoing descriptions.

In a second manner, the AS configuration information of the UE #2 may include the first AS configuration information. For details about the first AS configuration information, refer to the foregoing descriptions.

It should be understood that AS configuration information of another UE in the target group is similar to the AS configuration information of the UE #2. Reference may be made to the descriptions of the AS configuration information of the UE #2.

Optionally, the method may further include: The UE #2 sends second sidelink signaling by using the second identifier as a source identifier and the group identifier as a destination identifier. The second sidelink signaling may include third AS configuration information. For the third AS configuration information, refer to the foregoing descriptions.

According to the method provided in this application, AS configuration information of UE in a group may be exchanged through sidelink signaling, to implement transmission of the AS configuration information.

This application further provides a communication method. According to the method, a unicast connection may be established during group establishment. The following provides descriptions with reference to FIG. 7.

FIG. 7 shows a communication method. The method may include S710 and S720. The following describes the steps shown in FIG. 7. It should be understood that UE #1 and UE #2 herein respectively correspond to the first UE and the second UE in the method 300, and a first identifier and a second identifier respectively correspond to the identifier #1 and the identifier #2 in the method 300.

S710: The UE #1 broadcasts a group establishment request message.

For this step, refer to S310. Compared with S310, the group establishment request message herein may further include a third identifier, and the third identifier is a source identifier allocated by the UE #1 to a unicast connection between the UE #1 and UE in a target group.

S720: Member UE replies with a group establishment request accept message.

For this step, refer to S320. In comparison with S320, herein, after receiving the group establishment request message, if determining to establish a unicast connection, the member UE allocates a source identifier to the unicast connection, and includes the source identifier in the group establishment request accept message with which the member UE replies. For example, if determining to establish a unicast connection, the UE #2 may allocate a source identifier (denoted as a fourth identifier) to the unicast connection, and then include the fourth identifier in a group establishment request accept message. The UE #1 receives a group establishment request accept message with which each member UE replies, and may parse out a source identifier allocated by each member to a unicast connection. Then, the UE #1 may send AS configuration information corresponding to the UE #1 to the member UE, by using the third identifier as a source identifier and using, as a destination identifier, the source identifier allocated by the member UE to the unicast connection.

Therefore, the method may further include the following step:

S730: The UE #1 sends first AS configuration information to the UE #2.

For the first AS configuration information, refer to the foregoing descriptions.

Optionally, the method may further include: The UE #1 sends second AS configuration information to the UE #2.

For the second AS configuration information, refer to the foregoing descriptions.

Optionally, the method may further include: The UE #2 sends third AS configuration information to the UE #1 by using the fourth identifier as a source identifier and using the third identifier as a destination identifier.

For the third AS configuration information, refer to the foregoing descriptions.

According to the method provided in this application, UE may establish a unicast connection during group establishment, to implement transmission of AS configuration information.

It should be noted that transmission of the AS configuration information in this specification, such as the first AS configuration information and the second AS configuration information, is performed by using a method that is not limited to the methods described above. Transmission of the AS configuration information in this specification may alternatively be performed in another proper manner. For any UE in the target group, by using corresponding AS configuration information, the UE may learn of a resource for performing HARQ feedback when initiating groupcast communication with another UE. In the following, resources used for performing HARQ feedback are collectively referred to as a HARQ feedback resource. It should be understood that the HARQ feedback resource in the following mainly refers to a time-frequency resource.

That the UE #1 groupcasts data is used as an example. For any UE in the target group, for example, the UE #2, if the UE #2 can correctly obtain, through decoding, from a TB, a media access control protocol data unit (media access control protocol data unit, MAC PDU) sent by the UE #2, the UE #2 feeds back an acknowledgement (acknowledgement, ACK) to the UE #1 by using a corresponding HARQ feedback resource. If the UE #2 receives a TB sent by the UE #1 but cannot correctly obtain a MAC PDU through decoding, the UE #2 sends a negative acknowledgement (negative acknowledgement, NACK) to the UE #1 by using a corresponding HARQ feedback resource. Another possibility is that the UE #2 does not receive any signal, and in this case, the UE #2 does not send any information to the UE #1 by using a corresponding HARQ feedback resource.

Correspondingly, for the UE #1, after sending the TB, if the UE #1 receives the ACK fed back by the UE #2 by using the corresponding HARQ feedback resource, the UE #1 determines that the MAC PDU is successfully sent, discards or deletes the buffered MAC PDU, and then initiates transmission of new data. If the UE #1 receives the NACK fed back by the UE #2 by using the corresponding HARQ feedback resource, the UE #1 determines that transmission of the TB fails, and if a quantity of MAC PDU retransmission times corresponding to the TB does not reach a maximum quantity of times, or if a MAC PDU sending timer corresponding to the TB does not expire, the UE #1 performs retransmission of the MAC PDU. If the UE #1 does not receive the ACK or the NACK on the corresponding HARQ feedback resource, the sending fails, and this is equivalent to receiving the NACK. Similarly, if the quantity of MAC PDU retransmission times does not reach the maximum quantity of times, or if the MAC PDU sending timer does not expire, the UE #1 performs retransmission of the MAC PDU.

For any unicast connection, regardless of whether the unicast connection is the unicast connection that is provided in the foregoing and that is established for groupcast communication or the unicast connection is triggered to be established by a service, a unicast link needs to be monitored to ensure communication reliability. For a purpose of unicast link monitoring, if a case in which peer UE cannot receive or parse out data sent between the UE #1 and the UE #2 keeps occurring, it is determined that the unicast link fails.

Based on the foregoing understanding, this application further provides a method for monitoring a unicast link by transmit-end UE, including:
The transmit-end UE maintains a counter N, where
an initial value of the counter N is 0.

The counter is incremented by 1 if a NACK is received on a HARQ feedback resource.

The counter is returned to zero if an ACK is received on a HARQ feedback resource.

If the counter N reaches a threshold, it is determined that a unicast connection between two UEs fails.

Considering that there are a plurality of unicast connections between the two UEs, the transmit-end UE maintains one counter for each unicast connection, and the counters are independent of each other.

A specific value of the counter may be configured by a base station by using RRC signaling or a broadcast message, or may be configured by a core network, or may be a built-in value in a UE chip, or may be a built-in value in a subscriber identification module (subscriber identification module) SIM card, or may be fixed.

As described above, a case in which receive-end UE does not receive data sent by the transmit-end UE may occur. Correspondingly, the receive-end UE does not feed back any information by using a corresponding HARQ feedback resource. Correspondingly, the transmit-end UE does not receive the ACK or the NACK. Because the transmit-end UE knows a HARQ feedback resource corresponding to data sent this time, when the transmit-end UE does not receive the ACK or the NACK on the HARQ feedback resource corresponding to the data sent this time, it is considered that the NACK is received, and a corresponding counter also needs to be incremented by 1. In this case, a complete procedure for the transmit-end UE to monitor the unicast link is as follows:

The initial value of the counter N is 0.

The counter is incremented by 1 if the NACK is received on the HARQ feedback resource or no ACK or NACK is received on the HARQ feedback resource.

The counter is returned to zero if the ACK is received on the HARQ feedback resource.

If the counter N reaches the threshold, it is determined that the unicast connection between the two UEs fails.

Further, it is considered that UE may send data irregularly on the unicast link, that is, there may be a long interval between sending of two pieces of data. In this case, if the counter continues to be maintained, there may be a possibility of by-mistake killing. Because the interval is long, a channel is almost recovered later. Therefore, a concept of a validity time is considered to be introduced for the counter, and the validity moment may correspond to a timer T. With reference to the foregoing scenario, in this case, the complete procedure for the transmit-end UE to monitor the unicast link is as follows:

The initial value of the counter N is 0.

The counter is incremented by 1 if the NACK is received on the HARQ feedback resource or no ACK or NACK is received on the HARQ feedback resource.

If the counter is incremented by 1 for the first time, or if N=1, the timer T is started.

If the ACK is received on the HARQ feedback resource or the timer T expires, the counter is returned to zero and the timer T is reset.

If the counter N reaches the threshold, it is determined that the unicast connection between the two UEs fails, and the timer T is reset.

Implicitly, a condition for finally determining that the unicast connection fails includes: The counter N reaches the threshold, and the timer T is still running, and this may also be understood as that the counter N reaches the threshold before the timer T expires.

It is similar to setting of the counter N that, a value of the timer T may be configured by the base station by using RRC signaling or a broadcast message, or may be configured by the core network, or may be a built-in value in the UE chip, or may be a built-in value in the SIM card, or may be fixed.

The foregoing radio link failure (radio link failure, RLF) determining that is based on HARQ feedback is applicable to any unicast connection scenario, and is not limited to the foregoing unicast connection for groupcast.

After it is determined that the unicast connection fails, user plane processing and control plane processing are performed.

The user plane processing includes: stopping transmission of the unicast connection. Releasing a transmission buffer of the unicast connection may specifically include at least one of a to-be-sent resource request (source request, SR) SR, a buffer status report (buffer status report, BSR) BSR, or data.

Control plane processing: An AS may indicate to an upper layer, where the upper layer may be a V2X layer or an application layer.

When indicating to the V2X layer, the AS further indicates an identifier of the unicast connection. The V2X layer may further initiate a unicast connection release procedure, and indicate to the AS, and the AS correspondingly releases an AS configuration corresponding to the unicast connection. If UE is in a connected mode, sidelink UE information is updated to the base station.

In parallel, optionally, the AS may alternatively directly release the AS configuration and indicate to the V2X layer.

The indicating to the application layer may be that the AS indicates to the application layer by using the V2X layer, to indicate that a sidelink is unavailable for the unicast service.

Optionally, a unicast connection link recovery may be further attempted before this. If the UE is in an idle mode or an inactive mode, the UE may attempt to perform a recovery based on broadcast or preconfigured information. If the UE is in the connected mode, the UE may report failure information to the base station and wait for the base station to perform reconfiguration.

However, considering a delay problem of communication on the sidelink, the UE should not keep waiting for the recovery, that is, a limitation needs to be imposed on recovery time. Therefore, a timer T1 is considered, and one timer T1 is maintained for each unicast connection.

If it is determined that sending through the unicast connection fails, the timer T1 of the unicast connection is started. If the unicast connection is recovered, T1 is stopped. If the timer T1 expires, a failure/a recovery failure of the unicast connection is declared.

A specific determining criterion for the unicast connection recovery may be that the UE detects a proper resource pool (where the resource pool may be limited not to be an original resource pool, or may be limited to be an original resource pool), or a reconfiguration message received by the UE from the base station includes an identifier of the unicast connection, or includes a new resource pool.

After the failure/the recovery failure of the unicast connection is declared, actions described above are performed, and include the user plane processing and the control plane processing.

As mentioned above, the leader UE sends the AS configuration to the member UE after the unicast connection is established. In a common unicast communication scenario, an AS configuration is also exchanged between two UEs. The transmit-end UE sends an RRC message on the sidelink to the receive-end UE, where the RRC message includes the AS configuration. The receive-end UE may fail to execute the configuration. In this case, the receive-end UE may send a configuration failure message to the transmit-end UE, but sometimes the failure message cannot be sent. In this case, the transmit-end UE maintains a timer T2 by itself, and determines, based on the timer, that the configuration fails. There is one timer T2 for each unicast connection. When the RRC entity generates a sidelink RRC message and sends the sidelink RRC message to a bottom layer of the RRC entity, the RRC entity starts the timer T2. The RRC entity stops the timer if receiving a recovery completion message from peer UE. If the timer expires, it is determined that the configuration of the unicast connection fails. A behavior after determining that the configuration of the unicast connection fails is similar to the processing after the RLF mentioned in the foregoing. The only difference is that, if an indication is sent to the base station, specific reasons for the indication are different.

Corresponding to the methods provided in the foregoing method embodiments, the embodiments of this application further provides corresponding communication apparatuses. The communication apparatus includes a corresponding module or unit configured to perform the foregoing embodiment. The module or unit may be software, hardware, or a combination of software and hardware.

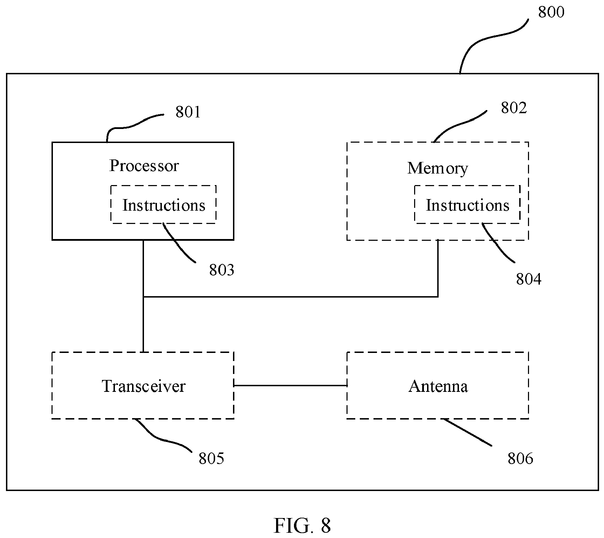

FIG. 8 is a schematic diagram of a structure of a communication apparatus 800. The apparatus 800 may be a network device; or may be a terminal device; or may be a chip, a chip system, a processor, or the like that supports a network device in implementing the foregoing methods; or may be a chip, a chip system, a processor, or the like that supports a terminal device in implementing the foregoing methods. The apparatus may be configured to implement the methods described in the foregoing method embodiments. For details, refer to the descriptions in the foregoing method embodiments.

The apparatus 800 may include one or more processors 801. The processor 801 may also be referred to as a processing unit, and may implement a specific control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 801 may also store instructions and/or data 803. The instructions and/or data 803 may be run by the processor, so that the apparatus 800 performs the methods described in the foregoing method embodiments.

In another optional design, the processor 801 may include a transceiver unit configured to implement receiving and sending functions. For example, the transceiver unit may be a transceiver circuit, an interface, or an interface circuit. A transceiver circuit, an interface, or an interface circuit configured to implement the sending function and that configured to implement the receiving function may be separated, or may be integrated. The transceiver circuit, the interface, or the interface circuit may be configured to read and write code or data. Alternatively, the transceiver circuit, the interface, or the interface circuit may be configured to perform transmission of or transfer a signal.

In another possible design, the apparatus 800 may include a circuit. The circuit may implement the sending, receiving, or communication function in the foregoing method embodiments.

Optionally, the apparatus 800 may include one or more memories 802. The memory stores instructions 804, and the instructions may be run on the processor, so that the apparatus 800 performs a method described in the foregoing method embodiments. Optionally, the memory may further store data. Optionally, the processor may also store instructions and/or data. The processor and the memory may be separately disposed, or may be integrated together. For example, the correspondences described in the foregoing method embodiments may be stored in the memory or stored in the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver machine, a transceiver circuit, a transceiver, or the like, and is configured to implement receiving and sending functions.

The processor and the transceiver described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may also be fabricated by using various IC process technologies, for example, a complementary metal oxide semiconductor (complementary metal oxide semiconductor, CMOS), an n-type metal oxide semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a network device or a terminal device. However, a range of the apparatus described in this application is not limited thereto, and a structure of the apparatus may not be limited to FIG. 8. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others, or the like.

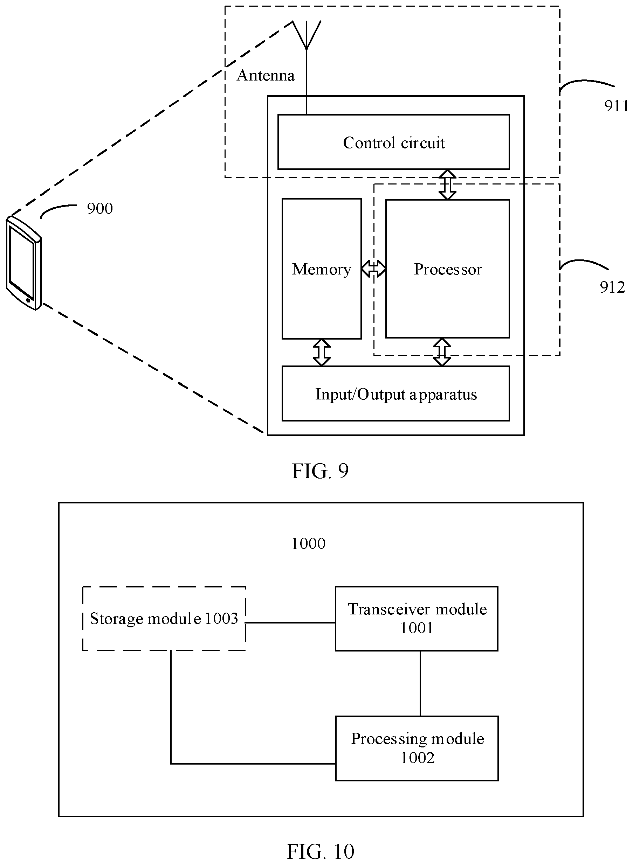

FIG. 9 is a schematic diagram of a structure of a terminal device. For ease of description, FIG. 9 shows only main components of the terminal device. As shown in FIG. 9, the terminal device 900 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus such as a touchscreen, a display, or a keyboard is mainly configured to: receive data entered by a user, and output data to the user.

After the terminal device is powered on, the processor may read the software program in a storage unit, parse and execute instructions of the software program, and process the data of the software program. When data needs to be sent wirelessly, the processor performs baseband processing on the to-be-sent data, and outputs a baseband signal to the radio frequency circuit. The radio frequency circuit processes the baseband signal to obtain a radio frequency signal, and sends the radio frequency signal in an electromagnetic wave form by using the antenna. When data is sent to the terminal device, the radio frequency circuit receives a radio frequency signal by using the antenna, further converts the radio frequency signal into a baseband signal, and outputs the baseband signal to the processor. The processor converts the baseband signal into data, and processes the data.

For ease of description, FIG. 9 shows only one memory and one processor. In an actual terminal device, there may be a plurality of processors and a plurality of memories. The memory may also be referred to as a storage medium, a storage device, or the like. This is not limited in the embodiments of the present invention.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 9. A person skilled in the art may understand that the baseband processor and the central processing unit each may be an independent processor, and are interconnected by using technologies such as a bus. A person skilled in the art can understand that the terminal device may include a plurality of baseband processors to adapt to different network standards, the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built-in data in the processor, or may be stored in the storage unit in a form of a software program. The processor executes the software program to implement a baseband processing function.

In an example, the antenna and the control circuit that have receiving and sending functions may be considered as a transceiver unit 911 of the terminal device 900, and the processor having a processing function may be considered as a processing unit 912 of the terminal device 900. As shown in FIG. 8, the terminal device 900 includes the transceiver unit 911 and the processing unit 912. The transceiver unit may also be referred to as a transceiver, a transceiver machine, a transceiver apparatus, or the like. Optionally, a component that is in the transceiver unit 911 and that is configured to implement a receiving function may be considered as a receiving unit, and a component that is in the transceiver unit 911 and that is configured to implement a sending function may be considered as a sending unit. That is, the transceiver unit 911 includes the receiving unit and the sending unit. For example, the receiving unit may also be referred to as a receiver, a receiver circuit, or the like, and the sending unit may be referred to as a transmitter, a transmitter circuit, or the like. Optionally, the receiving unit and the sending unit may be one integrated unit, or may be a plurality of independent units. The receiving unit and the sending unit may be in one geographical location, or may be distributed in a plurality of geographical locations.

As shown in FIG. 10, this application provides an apparatus 1000. The apparatus may be a terminal device, or may be a component (for example, an integrated circuit or a chip) of a terminal device. Alternatively, the apparatus may be a network device, or may be a component (for example, an integrated circuit or a chip) of a network device. Alternatively, the apparatus may be another communication module configured to implement the methods in the method embodiments of this application. The apparatus 1000 may include a processing module 1002 (a processing unit). Optionally, the communication apparatus may further include a transceiver module 1001 (a transceiver unit) and a storage module 1003 (a storage unit).

In a possible design, one or more modules in FIG. 10 may be implemented by one or more processors, or may be implemented by one or more processors and memories, or may be implemented by one or more processors and transceivers, or may be implemented by one or more processors, memories, and transceivers. This is not limited in the embodiments of this application. The processor, the memory, and the transceiver may be disposed separately, or may be integrated.

The apparatus has a function of implementing the terminal device described in the embodiments of this application. For example, the apparatus includes a corresponding module, unit, or means (means) used for the terminal device to perform the steps related to the terminal device that are described in the embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

Alternatively, the apparatus has a function of implementing the network device described in the embodiments of this application. For example, the apparatus includes a corresponding module, unit, or means (means) used for the network device to perform the steps related to the network device that are described in the embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

It should be understood that the processor in the embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memories of the systems and methods described in this specification are intended to include but are not limited to these memories and a memory of any other proper type.

This application further provides a computer-readable storage medium. The computer-readable storage medium stores a computer program. When the computer program is executed by a computer, a function in any one of the foregoing method embodiments is implemented.

This application further provides a computer program product. When the computer program product is executed by a computer, a function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

It should be understood that "an embodiment" mentioned in the entire specification particular features, structures, or characteristics related to the embodiment are included in at least one embodiment of this application. Therefore, the embodiments in the entire specification are not necessarily same embodiments. In addition, these particular features, structures, or characteristics may be combined in one or more embodiments in any appropriate manner. It should be understood that, in the embodiments of this application, sequence numbers of the foregoing processes do not mean execution sequences. The execution sequences of the processes should be determined based on functions and internal logic of the processes, and should not constitute any limitation to implementation processes of the embodiments of this application.

It should be further understood that, in this application, "when" and "if' mean that UE or a base station performs corresponding processing in an objective situation, and are not intended to limit time, and the UE or the base station is not necessarily required to have a determining action during implementation, and do not mean any other limitation.

In addition, the terms "system" and "network" are usually used interchangeably in this specification. The term "and/or" in this specification describes only an association relationship for associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist.

In this specification, "at least one" indicates one or more. "A plurality of" means two or more.

It should be understood that in the embodiments of this application, "B corresponding to A" indicates that B is associated with A, and B may be determined based on A. However, it should further be understood that determining B based on A does not mean that B is determined based only on A. B may also be alternatively determined based on A and/or other information.

A person of ordinary skill in the art may be aware that, units and algorithm steps in examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the a plurality of embodiments provided in this application, it should be understood that the disclosed systems, apparatuses, and method may be implemented in another manner. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic, a mechanical, or another similar form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of the embodiments of this application.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a part contributing to a current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Further embodiments of the present invention are provided in the following. It should be noted that the numbering used in the following section does not necessarily need to comply with the numbering used in the previous sections.
Embodiment 1. A communication method, comprising:
   obtaining, by a first terminal device, a source identifier allocated to groupcast communication by a second terminal device, wherein the groupcast communication is communication for a target group, and the first terminal device and the second terminal device belong to the target group;
   generating, by a vehicle to everything V2X layer of the first terminal device, first sidelink signaling, wherein the first sidelink signaling comprises the source identifier allocated to the groupcast communication by the second terminal device and access stratum AS configuration information of the second terminal device;
   sending, by the V2X layer, the first sidelink signaling, a first identifier, and a group identifier to an AS of the first terminal device, wherein the first identifier is a source identifier allocated to the groupcast communication by the first terminal device, and the group identifier is used to identify the target group; and
   sending, by the AS, the first sidelink signaling by using the first identifier as a source identifier and using the group identifier as a destination identifier.
Embodiment 2. The method according to embodiment 1, wherein before the generating, by a vehicle to everything V2X layer of the first terminal device, first sidelink signaling, the method further comprises:
   sending, by the AS of the first terminal device, configuration information to the V2X layer, wherein the configuration information comprises the group identifier, and comprises the source identifier allocated to the groupcast communication by the second terminal device and the AS configuration information of the second terminal device; and
   the generating, by a vehicle to everything V2X layer of the first terminal device, first sidelink signaling comprises:
      generating, by the V2X layer, the first sidelink signaling based on the configuration information.
Embodiment 3. The method according to embodiment 1 or 2, wherein the AS configuration information of the second terminal device comprises first AS configuration information, the first AS configuration information is used by the second terminal device to determine a first feedback resource, and the first feedback resource is used by the second terminal device to perform hybrid automatic repeat request HARQ feedback on the groupcast communication initiated by the first terminal device.
Embodiment 4. The method according to embodiment 3, wherein the first AS configuration information is further used by the second terminal device to determine at least one second feedback resource, the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.
Embodiment 5. The method according to embodiment 3 or 4, wherein the AS configuration information of the second terminal device further comprises at least one piece of second AS configuration information, the at least one piece of second AS configuration information is in a one-to-one correspondence with the terminal device other than the second terminal device in the target group, second AS configuration information corresponding to a third terminal device is used by the third terminal device to determine at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is any terminal device other than the second terminal device in the target group.
Embodiment 6. The method according to embodiment 3 or 4, wherein the method further comprises:
   receiving, by the first terminal device, second sidelink signaling sent by the second terminal device, wherein the second sidelink signaling comprises third AS configuration information, the third AS configuration information is used by the first terminal device to determine a fourth feedback resource, and the fourth feedback resource is used by the first terminal device to perform hybrid automatic repeat request HARQ feedback on the groupcast communication initiated by the second terminal device.
Embodiment 7. The method according to any one of embodiments 1 to 6, wherein the first sidelink signaling further comprises a source identifier allocated to the groupcast communication by each terminal device other than the second terminal device in the target group and AS configuration information of each terminal device.
Embodiment 8. The method according to any one of embodiments 1 to 7, wherein before the first terminal device obtains a source identifier allocated to the groupcast communication by each terminal device in the target group, the method further comprises:
   broadcasting, by the first terminal device, a group establishment request message by using the first identifier as a source identifier and using, as a destination identifier, a default identifier corresponding to a target service type, wherein the group establishment request message is used to request to establish the target group, and the group establishment request message comprises the group identifier and information that is about the target group and that is in an application layer; and
   receiving, by the first terminal device, a group establishment request accept message fed back by each terminal device other than the first terminal device in the target group, wherein the group establishment request accept message corresponding to any terminal device is sent by using, as a source identifier, a source identifier allocated to the groupcast communication by the terminal device and using the group identifier as a destination identifier.
Embodiment 9. A communication method, comprising:
   receiving, by a second terminal device, first sidelink signaling sent by a first terminal device, wherein
   the first sidelink signaling comprises a source identifier allocated to groupcast communication by the second terminal device and access stratum AS configuration information of the second terminal device, the groupcast communication is communication for a target group, and the first terminal device and the second terminal device belong to the target group.
Embodiment 10. The method according to embodiment 9, wherein the receiving, by a second terminal device, first sidelink signaling sent by a first terminal device comprises:
   receiving, by a vehicle to everything V2X layer of the second terminal device, the first sidelink signaling; and
   the method further comprises:
      sending, by the V2X layer to an access stratum AS of the second terminal device, the source identifier allocated to the groupcast communication by the second terminal device and the AS configuration information of the second terminal device.
Embodiment 11. The method according to embodiment 10, wherein the AS configuration information of the second terminal device comprises first AS configuration information; and
   the method further comprises:
   determining, by the AS, a first feedback resource based on the first AS configuration information, wherein the first feedback resource is used by the second terminal device to perform hybrid automatic repeat request HARQ feedback on the groupcast communication initiated by the first terminal device.
Embodiment 12. The method according to embodiment 11, wherein the method further comprises:
   determining, by the AS, at least one second feedback resource based on the first AS configuration information, wherein the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.
Embodiment 13. The method according to embodiment 11 or 12, wherein the AS configuration information of the second terminal device further comprises at least one piece of second AS configuration information; and
   the method further comprises:
   determining, by the AS based on the at least one piece of second AS configuration information, a feedback resource corresponding to any terminal device other than the second terminal device in the target group, wherein a feedback resource of a third terminal device comprises at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is the any terminal device other than the second terminal device in the target group.
Embodiment 14. The method according to embodiment 11 or 12, wherein the method further comprises:
   sending, by the second terminal device, second sidelink signaling to the first terminal device, wherein the second sidelink signaling comprises third AS configuration information; and
   determining, by the second terminal device, a fourth feedback resource based on the third AS configuration information, wherein the fourth feedback resource is used by the first terminal device to perform hybrid automatic repeat request HARQ feedback on the groupcast communication initiated by the second terminal device.
Embodiment 15. The method according to any one of embodiments 9 to 14, wherein the first sidelink signaling further comprises a source identifier allocated to the groupcast communication by each terminal device other than the second terminal device in the target group and AS configuration information of each terminal device.
Embodiment 16. A communication apparatus, comprising:
   a processing unit, configured to obtain a source identifier allocated to groupcast communication by a second terminal device, wherein the groupcast communication is communication for a target group, and the apparatus and the second terminal device belong to the target group, wherein
   the processing unit is further configured to generate, in a vehicle to everything V2X layer, first sidelink signaling, wherein the first sidelink signaling comprises the source identifier allocated to the groupcast communication by the second terminal device and access stratum AS configuration information of the second terminal device; and
   the processing unit is further configured to send the first sidelink signaling, a first identifier, and a group identifier to an AS of the apparatus through the V2X layer, wherein the first identifier is a source identifier allocated to the groupcast communication by the apparatus, and the group identifier is used to identify the target group; and
   a transceiver unit, configured to send the first sidelink signaling through the AS by using the first identifier as a source identifier and using the group identifier as a destination identifier.
Embodiment 17. The apparatus according to embodiment 16, wherein the processing unit is further configured to:
   send configuration information to the V2X layer through the AS, wherein the configuration information comprises the group identifier, and comprises the source identifier allocated to the groupcast communication by the second terminal device and the AS configuration information of the second terminal device; and
   that the processing unit is configured to generate, in a vehicle to everything V2X layer, first sidelink signaling comprises:
      the processing unit is configured to generate, in the V2X layer, the first sidelink signaling based on the configuration information.
Embodiment 18. The apparatus according to embodiment 16 or 17, wherein the AS configuration information of the second terminal device comprises first AS configuration information, the first AS configuration information is used by the second terminal device to determine a first feedback resource, and the first feedback resource is used by the second terminal device to perform hybrid automatic repeat request HARQ feedback on the groupcast communication initiated by the apparatus.
Embodiment 19. The apparatus according to embodiment 18, wherein the first AS configuration information is further used by the second terminal device to determine at least one second feedback resource, the at least one second feedback resource is in a one-to-one correspondence with a terminal device other than the second terminal device in the target group, and any second feedback resource is used by the second terminal device to perform HARQ feedback on the groupcast communication initiated by a terminal device corresponding to the second feedback resource.
Embodiment 20. The apparatus according to embodiment 18 or 19, wherein the AS configuration information of the second terminal device further comprises at least one piece of second AS configuration information, the at least one piece of second AS configuration information is in a one-to-one correspondence with the terminal device other than the second terminal device in the target group, second AS configuration information corresponding to a third terminal device is used by the third terminal device to determine at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is any terminal device other than the second terminal device in the target group.
Embodiment 21. The apparatus according to embodiment 18 or 19, wherein the transceiver unit is further configured to:
   receive second sidelink signaling sent by the second terminal device, wherein the second sidelink signaling comprises third AS configuration information, the third AS configuration information is used by the apparatus to determine a fourth feedback resource, and the fourth feedback resource is used by the apparatus to perform hybrid automatic repeat request HARQ feedback on the groupcast communication initiated by the second terminal device.
Embodiment 22. The apparatus according to any one of embodiments 16 to 21, wherein the first sidelink signaling further comprises a source identifier allocated to the groupcast communication by each terminal device other than the second terminal device in the target group and AS configuration information of each terminal device.
Embodiment 23. The apparatus according to any one of embodiments 16 to 22, wherein the transceiver unit is further configured to:
   broadcast a group establishment request message by using the first identifier as a source identifier and using, as a destination identifier, a default identifier corresponding to a target service type, wherein the group establishment request message is used to request to establish the target group, and the group establishment request message comprises the group identifier and information that is about the target group and that is in an application layer; and
   receive a group establishment request accept message fed back by each terminal device other than the apparatus in the target group, wherein the group establishment request accept message corresponding to any terminal device is sent by using, as a source identifier, a source identifier allocated to the groupcast communication by the terminal device and using the group identifier as a destination identifier.
Embodiment 24. A communication apparatus, comprising:
   a transceiver unit, configured to receive first sidelink signaling sent by a first terminal device, wherein
   the first sidelink signaling comprises a source identifier allocated to groupcast communication by the apparatus and access stratum AS configuration information of the apparatus, the groupcast communication is communication for a target group, and the first terminal device and the apparatus belong to the target group.
Embodiment 25. The apparatus according to embodiment 24, wherein the transceiver unit is specifically configured to:
   receive, in a vehicle to everything V2X layer, the first sidelink signaling; and
   the apparatus further comprises:
      a processing unit, configured to send, to an access stratum AS of the apparatus through the V2X layer, the source identifier allocated to the groupcast communication by the apparatus and the AS configuration information of the apparatus.
Embodiment 26. The apparatus according to embodiment 25, wherein the AS configuration information of the apparatus comprises first AS configuration information; and
   the processing unit is further configured to:
   determine, in the AS, a first feedback resource based on the first AS configuration information, wherein the first feedback resource is used by the apparatus to perform hybrid automatic repeat request HARQ feedback on the groupcast communication initiated by the first terminal device.
Embodiment 27. The apparatus according to embodiment 26, wherein the processing unit is further configured to:
   determine, in the AS, at least one second feedback resource based on the first AS configuration information, wherein the at least one second feedback resource is in a one-to-one correspondence with a terminal device other than the apparatus in the target group, and any second feedback resource is used by the apparatus to perform HARQ feedback on the groupcast communication initiated by a terminal device corresponding to the second feedback resource.
Embodiment 28. The apparatus according to embodiment 26 or 27, wherein the AS configuration information of the apparatus further comprises at least one piece of second AS configuration information; and
   the processing unit is further configured to:
   determine, in the AS based on the at least one piece of second AS configuration information, a feedback resource corresponding to any terminal device other than the apparatus in the target group, wherein a feedback resource of a third terminal device comprises at least one third feedback resource, the at least one third feedback resource is in a one-to-one correspondence with a terminal device other than the third terminal device in the target group, any third feedback resource is used by the third terminal device to perform HARQ feedback on the groupcast communication initiated by a terminal device corresponding to the third feedback resource, and the third terminal device is the any terminal device other than the apparatus in the target group.
Embodiment 29. The apparatus according to embodiment 26 or 27, wherein the transceiver unit is further configured to:
   send second sidelink signaling to the first terminal device, wherein the second sidelink signaling comprises third AS configuration information; and
   the processing unit is further configured to:
      determine a fourth feedback resource based on the third AS configuration information, wherein the fourth feedback resource is used by the first terminal device to perform hybrid automatic repeat request HARQ feedback on the groupcast communication initiated by the apparatus.
Embodiment 30. The apparatus according to any one of embodiments 24 to 29, wherein the first sidelink signaling further comprises a source identifier allocated to the groupcast communication by each terminal device other than the apparatus in the target group and AS configuration information of each terminal device.
Embodiment 31. A communication method, comprising:
   sending, by a first terminal device, access stratum AS configuration information to a second terminal device, and starting a first timer associated with a unicast connection between the first terminal device and the second terminal device; and
   during running of the first timer, if the first terminal device receives a response message sent by the second terminal device for the AS configuration information, stopping, by the first terminal device, the first timer; or
   when the first timer expires, if the first terminal device does not receive a response message sent by the second terminal device for the AS configuration information, determining, by the first terminal device, that configuration based on the AS configuration information fails.
Embodiment 32. The method according to embodiment 31, wherein the starting a first timer associated with a unicast connection between the first terminal device and the second terminal device comprises:
   starting, by the first terminal device, the first timer when a radio resource control RRC entity of the first terminal device generates a sidelink RRC message and sends the sidelink RRC message to a lower layer of the RRC entity, wherein the RRC message comprises the AS configuration information.
Embodiment 33. The method according to embodiment 31 or 32, wherein the method further comprises:
   when the first timer expires, sending, by the first terminal device, indication information to a network device, wherein the indication information is used to indicate that the first timer expires.
Embodiment 34. The method according to any one of embodiments 31 to 33, wherein when the first timer expires, if the first terminal device does not receive the response message sent by the second terminal device for the AS configuration information, the method further comprises one or more of the following:
   stopping, by the first terminal device, performing transmission to the second terminal device through the unicast connection;
   releasing, by the first terminal device, a transmission buffer of the unicast connection, wherein the transmission buffer comprises one or more of the following: a to-be-sent resource request SR, a to-be-sent buffer status report BSR, or to-be-sent data;
   indicating, by an AS of the first terminal device, to an upper layer, that when the first timer expires, the first terminal device does not receive the response message sent by the second terminal device for the AS configuration information, wherein the upper layer is a vehicle to everything V2X layer or an application layer;
   when the V2X layer receives the indication sent by the AS, initiating, by the V2X layer, a unicast connection release procedure, and indicating, by the V2X layer, the AS to release an AS configuration of the unicast connection;
   releasing, by the AS, the AS configuration of the unicast connection, and indicating to the V2X layer that the AS has released the AS configuration of the unicast connection; or
   indicating, by the AS, to the application layer, that a sidelink of the unicast connection is unavailable.
Embodiment 35. The method according to any one of embodiments 31 to 34, wherein when the first timer expires, if the first terminal device does not receive the response message sent by the second terminal device for the AS configuration information, the method further comprises:
   performing, by the first terminal device, link restoration on the unicast connection.
Embodiment 36. The method according to embodiment 35, wherein the performing, by the first terminal device, link restoration on the unicast connection comprises:
   performing, by the first terminal device, link restoration on the unicast connection, and starting a second timer; and
   the method further comprises:
      stopping the second timer if the link restoration performed on the unicast connection succeeds during running of the second timer.
Embodiment 37. A communication apparatus, comprising:
   a transceiver unit, configured to send access stratum AS configuration information to a second terminal device; and
   a processing unit, configured to starting a first timer associated with a unicast connection between the apparatus and the second terminal device, wherein
   the processing unit is further configured to: during running of the first timer, if the transceiver unit receives a response message sent by the second terminal device for the AS configuration information, stop the first timer; or
   when the first timer expires, if the transceiver unit does not receive a response message sent by the second terminal device for the AS configuration information, determine that configuration based on the AS configuration information fails.
Embodiment 38. The apparatus according to embodiment 37, wherein the processing unit is specifically configured to:
   start the first timer when a radio resource control RRC entity of the apparatus generates a sidelink RRC message and sends the sidelink RRC message to a bottom layer of the RRC entity, wherein the RRC message comprises the AS configuration information.
Embodiment 39. The apparatus according to embodiment 37 or 38, wherein the transceiver unit is further configured to:
   when the first timer expires, send indication information to a network device, wherein the indication information is used to indicate that the first timer expires.
Embodiment 40. The method according to any one of embodiments 31 to 34, wherein the processing unit is further configured to:
   perform link restoration on the unicast connection.
Embodiment 41. A communication apparatus, comprising a processor, wherein the processor is coupled to a memory, the memory is configured to store a program or instructions, and when the program or the instructions are executed by the processor, the apparatus is enabled to perform the method according to any one of embodiments 1 to 15 or any one of embodiments 31 to 36.
Embodiment 42. A readable storage medium, storing a computer program or instructions, and when the computer program or the instructions are executed, a computer is enabled to perform the method according to any one of embodiments 1 to 15 or any one of embodiments 31 to 36.43. A computer program product, comprising computer program instructions, wherein the computer program instructions enable a computer to perform the method according to any one of embodiments 1 to 15 or any one of embodiments 31 to 36.

## Claims

1. A communication method, comprising:
when a radio resource control, RRC, entity of a first terminal device generates a sidelink RRC message and sends the sidelink RRC message to a lower layer of the RRC entity, starting, by the first terminal device, a first timer associated with a unicast connection between the first terminal device and a second terminal device, and sending access stratum, AS, configuration information to the second terminal device, wherein the sidelink RRC message comprises the AS configuration information; and
during running of the first timer, if the first terminal device receives a response message from the second terminal device for the AS configuration information, stopping, by the first terminal device, the first timer; or
when the first timer expires, if the first terminal device does not receive a response message from the second terminal device for the AS configuration information, determining, by the first terminal device, that configuration based on the AS configuration information fails.

2. The method according to claim 1, wherein the method further comprises:
when the first timer expires, sending, by the first terminal device, indication information to a network device, wherein the indication information is used to indicate that the first timer expires.

3. The method according to claim 1 or 2, wherein when the first timer expires, if the first terminal device does not receive the response message from the second terminal device for the AS configuration information, the method further comprises one or more of the following:
stopping, by the first terminal device, performing transmission to the second terminal device through the unicast connection;
releasing, by the first terminal device, a transmission buffer of the unicast connection, wherein the transmission buffer comprises one or more of the following: a to-be-sent resource request SR, a to-be-sent buffer status report BSR, or to-be-sent data;
indicating, by an AS of the first terminal device, to an upper layer, that when the first timer expires, the first terminal device does not receive the response message sent by the second terminal device for the AS configuration information, wherein the upper layer is a vehicle to everything V2X layer or an application layer;
when the V2X layer receives the indication sent by the AS, initiating, by the V2X layer, a unicast connection release procedure, and indicating, by the V2X layer, the AS to release an AS configuration of the unicast connection;
releasing, by the AS, the AS configuration of the unicast connection, and indicating to the V2X layer that the AS has released the AS configuration of the unicast connection; or
indicating, by the AS, to the application layer, that a sidelink of the unicast connection is unavailable.

4. The method according to any one of claims 1 to 3, wherein when the first timer expires, if the first terminal device does not receive the response message from the second terminal device for the AS configuration information, the method further comprises:
performing, by the first terminal device, link restoration on the unicast connection.

5. The method according to claim 4, wherein the performing, by the first terminal device, link restoration on the unicast connection comprises:
performing, by the first terminal device, link restoration on the unicast connection, and starting a second timer; and
the method further comprises:
stopping the second timer if the link restoration performed on the unicast connection succeeds during running of the second timer.

6. A communication apparatus, comprising:
a processing unit, configured to starting a first timer associated with a unicast connection between the apparatus and a second terminal device when a radio resource control, RRC, entity of the apparatus generates a sidelink RRC message and sends the sidelink RRC message to a bottom layer of the RRC entity; and
a transceiver unit, configured to send access stratum, AS, configuration information to the second terminal device, wherein the RRC message comprises the AS configuration information; and
wherein the processing unit is further configured to: during running of the first timer, if the transceiver unit receives a response message from the second terminal device for the AS configuration information, stop the first timer; or
when the first timer expires, if the transceiver unit does not receive a response message from the second terminal device for the AS configuration information, determine that configuration based on the AS configuration information fails.

7. The apparatus according to claim 6, wherein the transceiver unit is further configured to:
when the first timer expires, send indication information to a network device, wherein the indication information is used to indicate that the first timer expires.

8. The method according to claim 6 or 7, wherein when the first timer expires, if the transceiver unit does not receive the response message from the second terminal device for the AS configuration information, the processing unit is further configured to:
release, by an AS of the apparatus, the AS configuration of the unicast connection, and indicating to an V2X layer of the apparatus that the AS has released the AS configuration of the unicast connection; or
indicate, by an AS of the apparatus, to an application layer of the apparatus, that a sidelink of the unicast connection is unavailable.

9. The method according to any one of claims 6 to 8, wherein the processing unit is further configured to:
perform link restoration on the unicast connection.

10. A communication apparatus, comprising a processor, wherein the processor is coupled to a memory, the memory is configured to store a program or instructions, and when the program or the instructions are executed by the processor, the apparatus is enabled to perform the method according to any one of claims 1 to 5.

11. A readable storage medium, storing a computer program or instructions, and when the computer program or the instructions are executed, a computer is enabled to perform the method according to any one of claims 1 to 5.
